# EUROPEAN PATENT SPECIFICATION

(11) **EP 3 816 260 B1**
(45) Date of publication and mention of the grant of the patent: **08.03.2023**
(21) Application number: 19826919.3
(22) Date of filing: 27.06.2019
(51) Int. Cl.: C09K 5/06, F28D 20/02

(54) **HEAT STORAGE MATERIAL COMPOSITION AND USE THEREOF**
WÄRMESPEICHERSTOFFZUSAMMENSETZUNG UND VERWENDUNG DAVON
COMPOSITION DE MATÉRIAU DE STOCKAGE DE CHALEUR ET SON UTILISATION

(30) Priority: 28.06.2018 JP 2018123471
(43) Date of publication of application: 05.05.2021
(73) Proprietor: Kaneka Corporation, Osaka-shi, Osaka 530-8288 (JP)
(72) Inventor: KATANO, Chiaki, Settsu-shi, Osaka 566-0072 (JP)
(74) Representative: Vossius & Partner Patentanwälte Rechtsanwälte mbB
(86) International application number: PCT/JP2019/025709
(87) International publication number: WO 2020/004586

(56) References cited:
- WO-A1-2014/092093
- JP-A- H0 539 479
- JP-A- H05 237 368
- JP-A- 2007 501 925
- JP-A- 2016 014 088

## Description

### Technical Field

The present invention relates to a heat storage material composition and techniques for using the heat storage material composition.

### Background Art

Research institutions and medical facilities such as hospitals handle articles such as pharmaceutical products, medical devices, cells, test specimens, organs, and chemicals, some of which are preferably handled within a predetermined temperature range (hereinafter, such a temperature is also referred to as a "controlled temperature"). The same is true of articles such as foods handled by e.g. supermarkets. Such articles which are preferable handled within a predetermined temperature range may hereinafter be referred to as a "temperature control target article". Temperature control target articles are subject to temperature regulation to maintain their controlled temperatures, for the purpose of quality preservation. In particular, when a temperature control target article is to be transported or stored, it is preferable to keep the temperature control target article cool or warm within the controlled temperature range, for a predetermined period of time.

Examples of conventional methods of keeping a temperature control target article cool or warm include a method involving the following steps (1) and (2): (1) Preparing a temperature-maintaining container by placing, into a thermally insulative container, a heat storage material that has been either (a) frozen or solidified in advance or (b) melted in advance. (2) Placing the temperature control target article inside the temperature-maintaining container and utilizing the latent heat of the heat storage material to keep the temperature control target article cool or warm.

In order to keep the temperature control target article within the controlled temperature range for a long period, the heat storage material placed in the temperature-maintaining container preferably has (i) a melting temperature or solidification temperature within the controlled temperature range and (ii) a large amount of latent heat.

Specific examples of temperature control target articles and controlled temperatures thereof are as follows. For whole blood preparations and red blood cell preparations charged into a transfusion bag, the controlled temperature is typically preferably 2°C to 6°C. For drugs, the controlled temperature is typically preferably 2°C to 8°C. For biological tissue, the controlled temperature is typically preferably 18°C to 22°C. For blood platelet preparations charged into a transfusion bag, the controlled temperature is typically preferably 21°C to 24°C, and particularly preferably 22.5°C. For e.g. animal eggs and sperm for use in artificial insemination, the controlled temperature is typically preferably not less than 35°C.

Conventionally, a number of heat storage material compositions suitable for a controlled temperature exceeding 0°C have been developed and are in use.

For example, Patent Literature 1 discloses a device for thermally packaging an item which is a temperature control target article. The device includes at least one container substantially filled with alcohol. The alcohol changes phases. Patent Literature 1 discloses that the alcohol is a higher alcohol such as 1-decanol or 1-dodecanol.

Patent Literature 2 discloses a heat storage material composition whose main component is a mixture of (i) a higher alkane having 9 to 24 carbon atoms and (ii) a higher alcohol having 6 to 20 carbon atoms.

Patent Literature 3 discloses a heat storage material composition whose main component is a mixture of (i) a higher alcohol having 14 carbon atoms and (ii) paraffin wax. Citation List

### [Patent Literature]

[Patent Literature 1]
   Published Japanese Translation of PCT International Application Tokuhyo No. 2007-501925
[Patent Literature 2]
   International Publication No. WO 2014/092093
[Patent Literature 3]
   Japanese Patent Application Publication Tokukai No. 2016-014088

### Summary of Invention

### Technical Problem

However, in terms of stably maintaining the temperature of a temperature control target article at around 22.5°C, conventional art such as that above is insufficient and has room for further improvement.

An embodiment of the present invention has been accomplished in view of the above problem. An object of an embodiment of the present invention is to provide a novel heat storage material composition that (a) makes it possible to stably maintain the temperature of a temperature control target article at around 22.5°C and/or (b) makes it possible to maintain a comfortable temperature in a living space, and to provide techniques for using the novel heat storage material composition.

### Solution to Problem

As a result of diligent research in order to solve the above problem, the inventor of the present invention completed the present invention after newly finding that including a particular higher hydrocarbon and lauryl alcohol in a heat storage material composition makes it possible to obtain a heat storage material composition which (a) makes it possible to stably maintain a temperature of a temperature control target article at around 22.5°C and/or (b) makes it possible to maintain a comfortable temperature in a living space.

In other words, a heat storage material composition in accordance with an embodiment of the present invention includes: a higher hydrocarbon (A); and lauryl alcohol (B), the heat storage material composition satisfying all of the following conditions (1) to (5): (1) a weight ratio of the higher hydrocarbon (A) included in the heat storage material composition is not less than 2 weight% and not more than 22 weight% with respect to 100 weight% of the heat storage material composition; (2) the higher hydrocarbon (A) includes not less than two types of hydrocarbons having 20 to 35 carbon atoms, a weight ratio of the not less than two types of the hydrocarbons having 20 to 35 carbon atoms included in the higher hydrocarbon (A) being not less than 50 weight% with respect to 100 weight% of the total amount of the higher hydrocarbon (A) included in the heat storage material composition; (3) the higher hydrocarbon (A) includes a hydrocarbon whose melting peak temperature in a DSC curve is not less than 35°C and not more than 70°C; (4) a difference (ΔT) between a melting temperature of the heat storage material composition and a solidification temperature of the heat storage material composition is not more than 1.0°C; and (5) the heat storage material composition has a degree of solidification point depression of less than 1.5°C.

### Advantageous Effects of Invention

An embodiment of the present invention brings about the effect of (a) making it possible to stably maintain the temperature of a temperature control target article at around 22.5°C and/or (b) maintain a comfortable temperature in a living space.

### Brief Description of Drawings

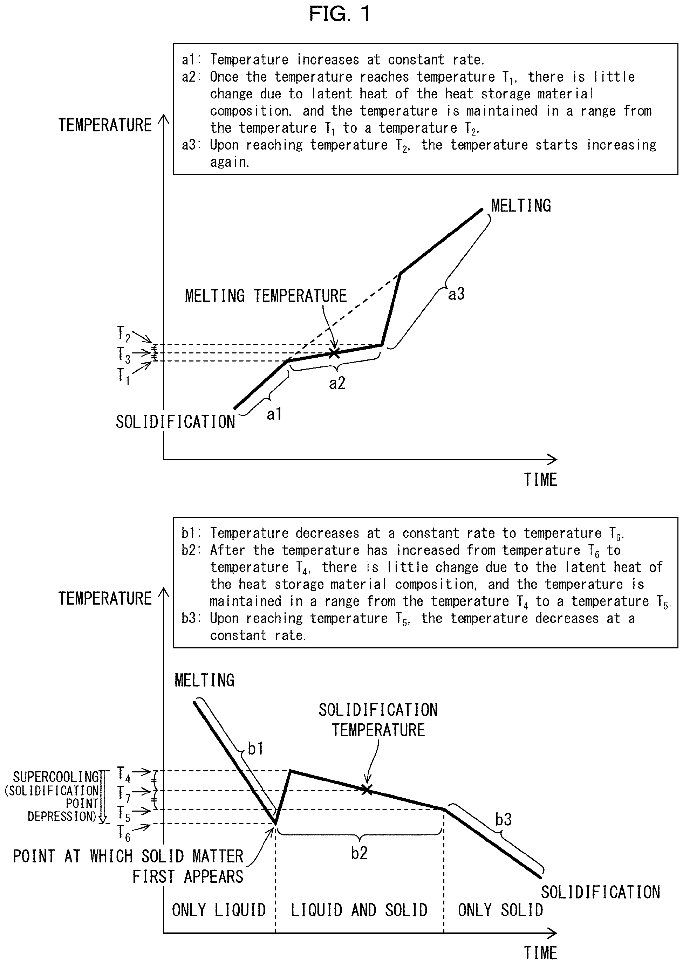

The upper diagram of Fig. 1 is a graph schematically indicating a change in temperature of a heat storage material composition during a phase change from a solidified state to a melted state. The lower diagram of Fig. 1 is a graph schematically indicating a change in temperature of a heat storage material composition during a phase change from a melted state to a solidified state.

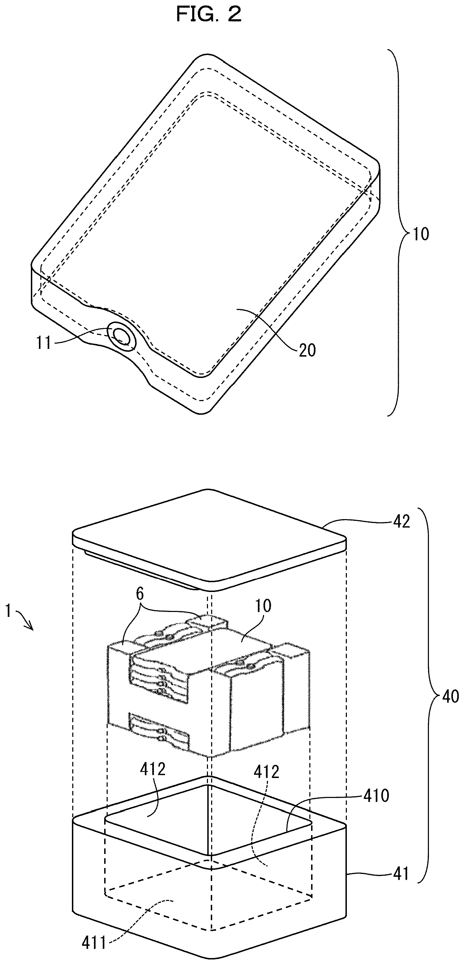

The upper diagram of Fig. 2 is a perspective view schematically illustrating an example of a heat storage material in accordance with an embodiment of the present invention. The lower diagram of Fig. 2 is an exploded perspective view schematically illustrating an example of a transport container in accordance with an embodiment of the present invention.

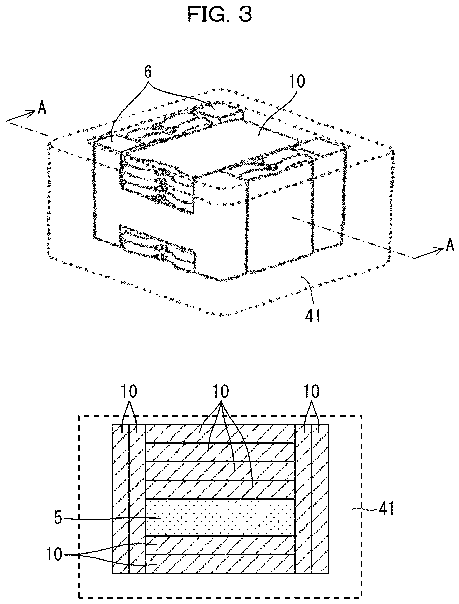

The upper diagram of Fig. 3 is a perspective view schematically illustrating an inside of a transport container in accordance with an embodiment of the present invention.

The lower diagram of Fig. 3 is a cross-sectional view schematically illustrating a cross-section taken along the line A-A in the upper perspective view of Fig. 3.

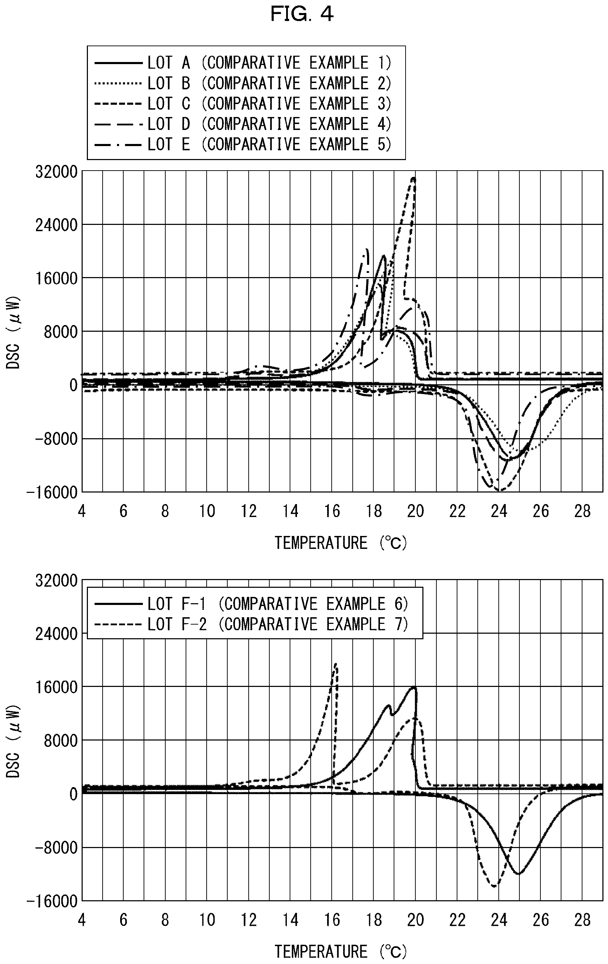

Fig. 4 indicates DSC curves obtained by carrying out differential scanning calorimeter (DSC) measurements for commercially available lauryl alcohol from differing production lots.

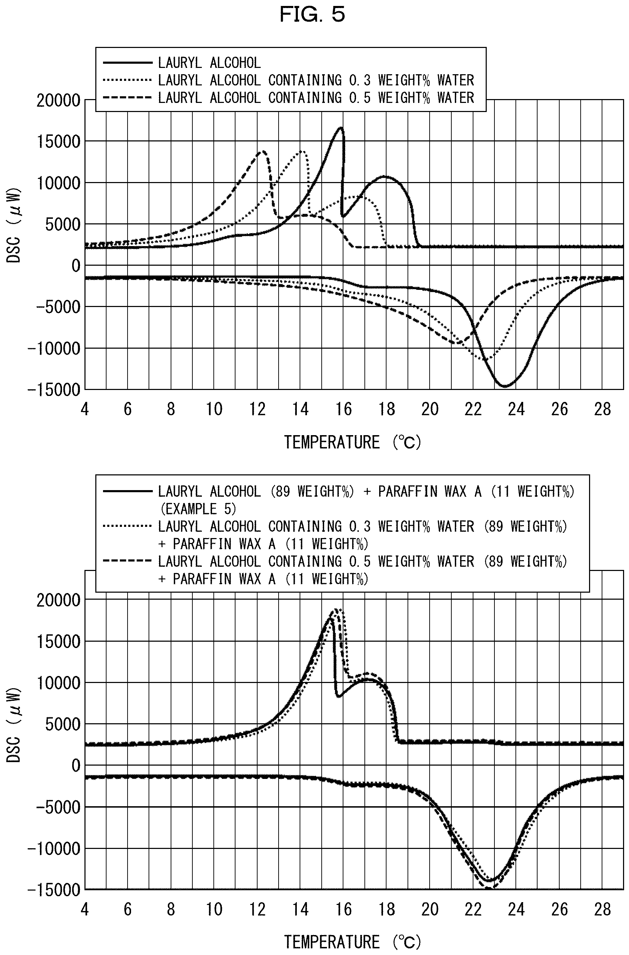

The upper diagram of Fig. 5 indicates DSC curves obtained by carrying out DSC measurements for commercially available lauryl alcohol and for lauryl alcohol obtained by mixing commercially available lauryl alcohol with predetermined amounts of water. The lower diagram of Fig. 5 indicates DSC curves obtained by carrying out DSC measurements for heat storage material compositions in accordance with an embodiment of the present invention that were prepared using the lauryl alcohol used in the DSC measurements of the upper diagram of Fig. 5.

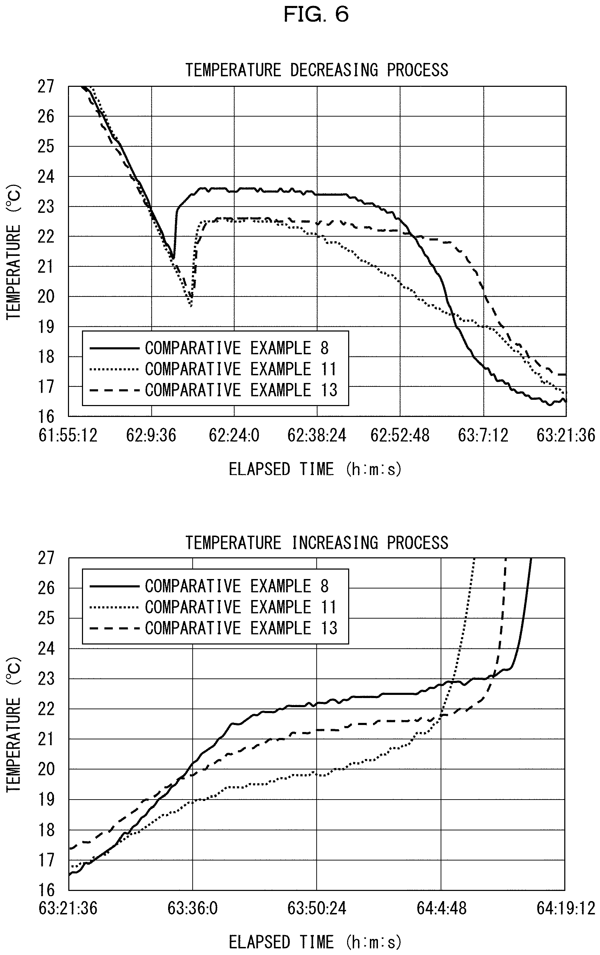

The upper diagram of Fig. 6 is a graph indicating a change in temperature of heat storage material compositions of Comparative Examples during a phase change from a melted state to a solidified state. The lower diagram of Fig. 6 is a graph indicating a change in temperature of heat storage material compositions of Comparative Examples during a phase change from a solidified state to a melted state.

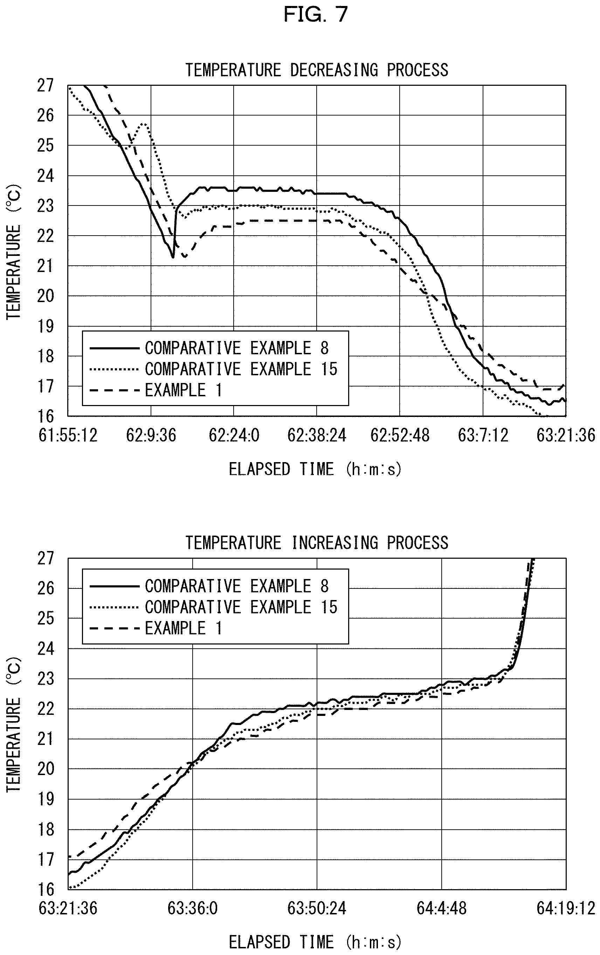

The upper diagram of Fig. 7 is a graph indicating a change in temperature of heat storage material compositions of Comparative Examples and an Example during a phase change from a melted state to a solidified state. The lower diagram of Fig. 7 is a graph indicating a change in temperature of heat storage material compositions of Comparative Examples and an Example during a phase change from a solidified state to a melted state.

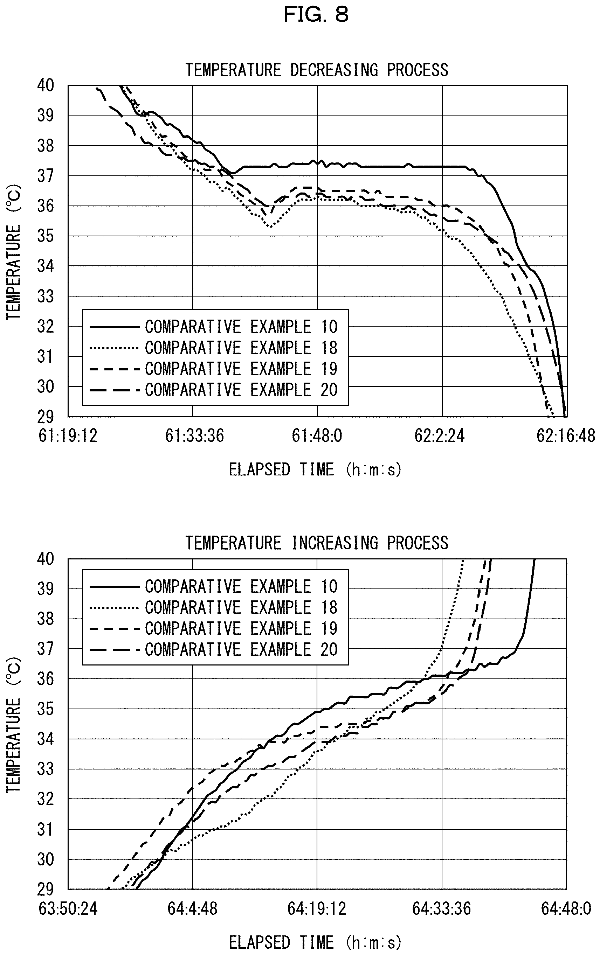

The upper diagram of Fig. 8 is a graph indicating a change in temperature of heat storage material compositions of Comparative Examples during a phase change from a melted state to a solidified state. The lower diagram of Fig. 8 is a graph indicating a change in temperature of heat storage material compositions of Comparative Examples during a phase change from a solidified state to a melted state.

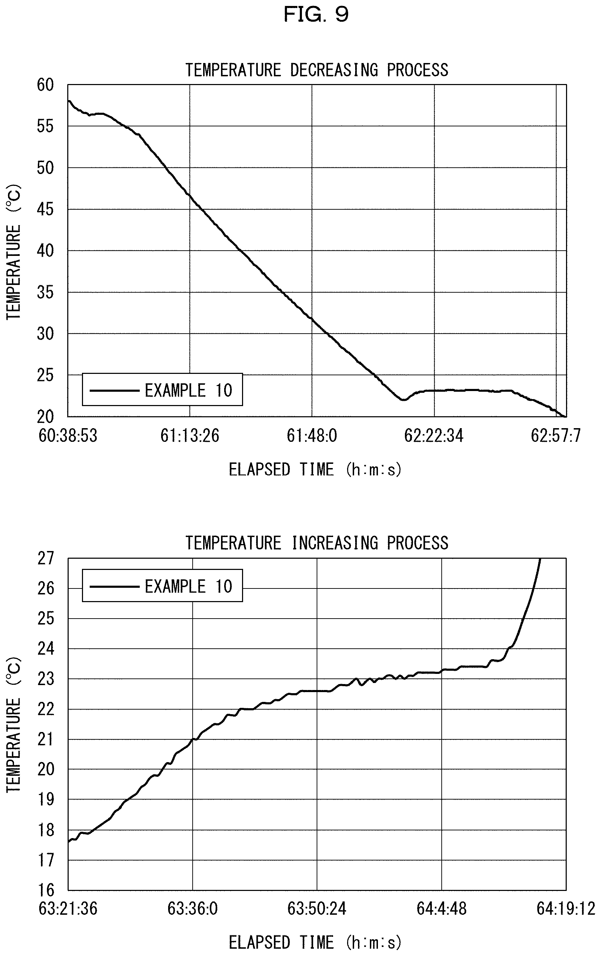

The upper diagram of Fig. 9 is a graph indicating a change in temperature of a heat storage material composition of an Example during a phase change from a melted state to a solidified state. The lower diagram of Fig. 9 is a graph indicating a change in temperature of a heat storage material composition of an Example during a phase change from a solidified state to a melted state.

Fig. 10 consists of graphs indicating a change in temperature of heat storage material compositions of Comparative Examples and Examples during a phase change from a melted state to a solidified state.

Fig. 11 consists of (i) a graph showing DSC curves obtained by carrying out differential scanning calorimeter (DSC) measurements for heat storage material compositions of Comparative Examples and Examples and (ii) a table indicating peak heat quantities of each of the heat storage material compositions as observed when carrying out the differential scanning calorimeter (DSC) measurements.

Fig. 12 is a view schematically illustrating standards used for delimiting melting peaks in a DSC curve when calculating the area of each melting peak.

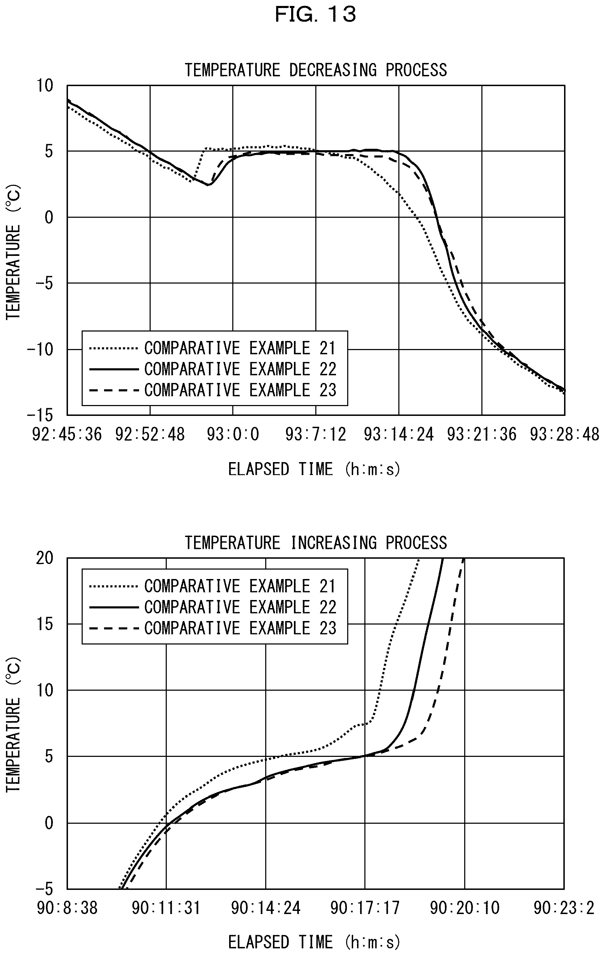

The upper diagram of Fig. 13 is a graph indicating a change in temperature of heat storage material compositions of Comparative Examples during a phase change from a melted state to a solidified state. The lower diagram of Fig. 13 is a graph indicating a change in temperature of heat storage material compositions of Comparative Examples during a phase change from a solidified state to a melted state.

### Description of Embodiments

The following description will discuss embodiments of the present invention. The present invention is not, however, limited to these embodiments. The present invention is not limited to any configurations described below, and can be altered in various ways within the scope of the claims. Further, any numerical range expressed as "A to B" herein means "not less than A (A or more) and not more than B (B or less)" unless otherwise specified.

### [1. Technical idea of an embodiment of the present invention]

As a result of diligent research, the inventor found that the prior art disclosed in the above Documents had problems or room for improvement as described below.

The art disclosed in Patent Literature 1 attempts to provide a device that substantially prevents a change in temperature inside the device by using phase change of alcohol to maintain a constant temperature inside a container. In Patent Literature 1, only alcohol is used for maintaining a constant temperature in the container. However, the inventor of the present invention found through research that when using a single substance, such as alcohol alone, it was difficult to set the temperature in a container to be a discretionarily chosen controlled temperature. Specifically, the inventor used a differential scanning calorimeter (DSC) to carry out DSC measurements for a plurality of higher alcohol samples that had the same composition but were taken from differing production lots. As a result, the inventor discovered that there were variations in melting peak temperatures and that the higher alcohol samples exhibited melting peak temperatures that differed from each other, as indicated in Fig. 4. Note here that "melting peak temperature" refers to a peak top temperature of a melting peak in a DSC curve. "Melting peak temperature" differs in definition from the term "melting temperature" in accordance with an embodiment of the present invention.

One of the reasons for this is presumably as follows. Higher alcohol can take on a plurality of crystal structures. As such, depending on the effects of e.g. impurities and environmental variations, there can be a large change in the proportion of the plurality of crystal structures that are present. As a result, melting behavior and solidification behavior become unstable in a DSC curve.

As such, with the art disclosed by Patent Literature 1, it is difficult to set the temperature inside the container to be a discretionarily chosen controlled temperature. Furthermore, even when using a higher alcohol having a melting temperature around a discretionarily chosen controlled temperature so as to set the temperature inside a container to that controlled temperature, the melting temperature and solidification temperature of higher alcohols is unstable due to the above-described reasons. As such, the art disclosed by Patent Literature 1 is, problematically, unsuitable for transportation or storage of an article whose controlled temperature must be in a narrow range, such as pharmaceutical products, medical devices, cells, test specimens, and organs.

The art disclosed by Patent Literature 2 is for use in transporting or storing a temperature control target article having a discretionarily chosen controlled temperature. The art disclosed by Patent Literature 2 attempts to provide a heat storage material composition having a melting temperature that is around the controlled temperature and constant, with no variation in melting behavior or melting temperature. In the art disclosed by Patent Literature 2 relating to the heat storage material composition, in order to solve the problems of Patent Literature 1, a heat storage material composition includes two or more types of raw materials whose melting temperatures differ from each other by a small amount. In this way, the art disclosed by Patent Literature 2 provides a heat storage material composition having a desired melting temperature, without variation in melting behavior or melting temperature. In the art disclosed by Patent Literature 2, two or more types or differing raw materials are used to achieve a desired melting temperature in the heat storage material composition. These two or more types of raw materials have melting temperatures that differ from each other by a small amount. Mixing these materials to obtain a composition causes these raw materials to affect each other's melting temperatures. As such, the melting temperature of the heat storage material composition has a melting temperature that differs from the melting temperatures of the substances used as raw materials. The inventor of the present invention studied the solidification behavior of the heat storage material composition of Patent Literature 2 with use of a thermocouple and thermostatic bath. As a result, the inventor discovered that the heat storage material composition exhibited a large degree of supercooling, and that it was impossible to achieve a stable solidification temperature. Thus, the art disclosed by Patent Literature 2 has room for further improvement when used for transporting or storing articles such as blood platelet preparations that require the controlled temperature to fall in a very narrow range.

The art disclosed by Patent Literature 3 is for use in transporting or storing a temperature control target article having a controlled temperature around body temperature (35°C to 37°C). The art disclosed by Patent Literature 3 attempts to provide a heat storage material composition having a melting temperature that is around the controlled temperature and constant, with no variation in melting behavior or melting temperature. In the art disclosed by Patent Literature 3 relating to the heat storage material composition, in order to solve the problems of Patent Literature 1, a heat storage material composition includes two or more types of raw materials whose melting temperatures differ from each other by a large amount. In this way, the art disclosed by Patent Literature 3 provides a heat storage material composition having a melting temperature around 37°C. However, in Patent Literature 3, the melting temperature of the heat storage material composition differs greatly from the melting temperatures of the substances used as raw materials.

As described above, the art disclosed by Patent Literature 2 and Patent Literature 3 attempts to provide a heat storage material composition having a constant melting temperature, with no variation in melting behavior or melting temperature. However, in both of these cases, the melting temperature of the heat storage material composition has a melting temperature that differs from the melting temperatures of the substances used as raw materials. In other words, the art disclosed by Patent Literature 2 and Patent Literature 3 has room for further improvement, in terms of obtaining a heat storage material composition that has the same melting temperature as the substances used as raw materials, without variation in the melting behavior and melting temperature. Note here that lauryl alcohol has a melting temperature that (i) is 23.5°C according to chemistry handbooks, and (ii) is approximately 22.4°C according to a measurement method in accordance with an embodiment of the present invention which method uses a thermocouple and a thermostatic bath.

An embodiment of the present invention has been accomplished in view of the above problems. An object of an embodiment of the present invention is to provide a novel heat storage material composition that (a) makes it possible to stably maintain the temperature of a temperature control target article, such as a blood platelet preparation, whose controlled temperature is around 22.5°C at around the melting temperature of lauryl alcohol, and/or (b) makes it possible to maintain a comfortable temperature in a living space, and to provide techniques for using the novel heat storage material composition. An object of an embodiment of the present invention more preferably lies in providing a novel heat storage material composition which (a) has a melting temperature and a solidification temperature which are stably in a range of 21.5°C to 23.5°C, (b) exhibits only a small difference (ΔT) or no difference (ΔT) between melting temperature and solidification temperature, and (c) has only a small degree of solidification point depression (also called supercooling).

The following description will discuss embodiments of the present invention with reference to specific examples.

### [2. Heat Storage Material Composition]

A heat storage material composition in accordance with an embodiment of the present invention includes: a higher hydrocarbon (A); and lauryl alcohol (B), the heat storage material composition satisfying all of the following conditions (1) to (5): (1) a weight ratio of the higher hydrocarbon (A) included in the heat storage material composition is not less than 2 weight% and not more than 22 weight% with respect to 100 weight% of the heat storage material composition; (2) the higher hydrocarbon (A) includes not less than two types of hydrocarbons having 20 to 35 carbon atoms, a weight ratio of the not less than two types of the hydrocarbons having 20 to 35 carbon atoms included in the higher hydrocarbon (A) being not less than 50 weight% with respect to 100 weight% of the total amount of the higher hydrocarbon (A) included in the heat storage material composition; (3) the higher hydrocarbon (A) includes a hydrocarbon whose melting peak temperature in a DSC curve is not less than 35°C and not more than 70°C; (4) a difference (ΔT) between a melting temperature of the heat storage material composition and a solidification temperature of the heat storage material composition is not more than 1.0°C; and (5) the heat storage material composition has a degree of solidification point depression of less than 1.5°C.

With the above configuration, the heat storage material composition in accordance with an embodiment of the present invention has the following advantages (A1) to (A4):
Advantage (A1): It is possible to prevent or reduce variations in the melting behavior and the solidification behavior between production lots of lauryl alcohol.
Advantage (A2): The melting temperature and the solidification temperature are stably within the range of 21.5°C to 23.5°C.
Advantage (A3): A difference (ΔT) between the melting temperature and the solidification temperature is small (for example, a difference of not more than 1.0°C).
Advantage (A4): The degree of solidification point depression is small (for example, less than 1.5°C).

Because it has the above advantages, the heat storage material composition in accordance with an embodiment of the present invention can be suitably used for (a) stable storage and transport of a temperature control target article, such as a blood platelet preparation, whose controlled temperature is around 22.5°C, and (b) maintaining a comfortable temperature in a living space.

Herein, "living space" refers to an indoor space in a building such as a house or an office building, in which space one or more humans live or carry out activities. The range of temperatures at which humans can comfortably live or carry out activities is considered to be around 22.5°C, specifically 20.5°C to 24.5°C. As such, herein, "maintaining a comfortable temperature in a living space" refers to maintaining a temperature of 20.5°C to 24.5°C in a living space.

Herein, "a heat storage material composition in accordance with an embodiment of the present invention" can also be referred to simply as "the present heat storage material composition". That is, the term "the present heat storage material composition" is intended to refer to an embodiment of the heat storage material composition in accordance with the present invention.

The present heat storage material composition can be used as a latent-heat-type heat storage material because the heat storage material composition absorbs thermal energy during a phase transition from a solidified (solid) state to a melted (liquid) state (in other words, absorbs thermal energy during melting). The present heat storage material composition can also be used as a latent-heat-type heat storage material because the heat storage material composition releases thermal energy during a phase transition from a melted (liquid) state to a solidified (solid) state (in other words, releases thermal energy during solidification). As such, the present heat storage material composition can also be called a "latent-heat-type heat storage material composition".

Herein, the term "melted state" includes not only the liquid mentioned above, but also a gel state described later.

The following description will first discuss components of the present heat storage material composition, and will then discuss physical properties (e.g., a melting temperature) of the present heat storage material composition and a method of producing the present heat storage material composition.

### [2-1. Components of Heat Storage Material Composition]

### <Higher Hydrocarbon (A)>

In an embodiment of the present invention, a higher hydrocarbon (A) includes not less than two types, preferably not less than three types, more preferably not less than four types, even more preferably not less than five types, and particularly preferably not less than six types of hydrocarbons, each type having 20 to 35 carbon atoms. For example, the higher hydrocarbon (A) includes not less than two types, preferably not less than three types, more preferably not less than four types, even more preferably not less than five types of hydrocarbons, and particularly preferably not less than six types of hydrocarbons, each type having a differing number of carbon atoms in a range from 20 to 35.

The higher hydrocarbon (A) preferably includes not less than two types, more preferably not less than three types, more preferably not less than four types, even more preferably not less than five types, and particularly preferably not less than six types of hydrocarbons, each type having 20 to 30 carbon atoms. For example, the higher hydrocarbon (A) includes preferably not less than two types, more preferably not less than three types, more preferably not less than four types, even more preferably not less than five types, and particularly preferably not less than six types of hydrocarbons, each type having a differing number of carbon atoms in a range from 20 to 30.

The melting temperature of the higher hydrocarbon (A) is preferably not less than normal temperature (for example, 20°C) and not more than 70°C. The melting temperature of the higher hydrocarbon (A) depends greatly on the melting temperature of each hydrocarbon included in the higher hydrocarbon (A). As such, the melting temperature of each hydrocarbon included in the higher hydrocarbon (A) is preferably not less than normal temperature (for example, 20°C) and not more than 70°C. The melting temperature of the higher hydrocarbon (A) and the melting temperature of each hydrocarbon included in the higher hydrocarbon (A) are more preferably 30°C to 65°C, and even more preferably 35°C to 55°C.

Herein, the melting temperature of the higher hydrocarbon (A) is a value measured using a thermocouple and a thermostatic bath, similarly to the melting temperature of the heat storage material composition (described later).

The higher hydrocarbon (A) contains hydrocarbons having 20 to 35 carbon atom at a weight ratio of not less than 50 weight%, preferably not less than 55 weight%, more preferably not less than 60 weight%, even more preferably not less than 65 weight%, and particularly preferably not less than 70 weight%, with respect to 100 weight% of the total weight of the higher hydrocarbon (A) included in the heat storage material composition. Such a configuration is better at bringing about the above-described advantages (1) to (4).

The higher hydrocarbon (A) preferably contains hydrocarbons having 20 to 30 carbon atom at a weight ratio of not less than 50 weight%, more preferably not less than 55 weight%, more preferably not less than 60 weight%, even more preferably not less than 65 weight%, and particularly preferably not less than 70 weight%, with respect to 100 weight% of the total weight of the higher hydrocarbon (A) included in the heat storage material composition. Such a configuration is even better at bringing about the above-described advantages (1) to (4).

The higher hydrocarbon (A) contains a hydrocarbon whose melting peak temperature in a DSC curve is not less than 35°C and not more than 70°C, preferably contains a hydrocarbon whose melting peak temperature in a DSC curve is not less than 40°C and not more than 65°C, more preferably contains hydrocarbon whose melting peak temperature in a DSC curve is not less than 45°C and not more than 60°C, and even more preferably contains a hydrocarbon whose melting peak temperature in a DSC curve is not less than 45°C and not more than 55°C. Such a configuration is better at bringing about the above-described advantages (1) to (4).

In a DSC curve obtained by DSC measurement, the higher hydrocarbon (A) preferably has a melting peak of not less than 35°C and not more than 70°C, more preferably has a melting peak of not less than 40°C and not more than 65°C, even more preferably has a melting peak of not less than 45°C and not more than 60°C, and particularly preferably has a melting peak of not less than 45°C and not more than 55°C. Such a configuration is better at bringing about the above-described advantages (1) to (4).

The hydrocarbons n-eicosane (melting point: 37°C) and n-docosane (melting point: 44°C) can be suitably used as hydrocarbons contained in the higher hydrocarbon (A), because these hydrocarbons solidify and melt sufficiently within the temperature range at which the heat storage material composition is used (for example, -20°C to 55°C). Note here that the melting points written in parentheses after the compound name were taken from a chemistry handbook.

In an embodiment of the present invention, paraffin wax can be used as the higher hydrocarbon (A). Paraffin wax is a mixture containing a plurality of types of hydrocarbons. These hydrocarbons have favorable crystallinity and are obtained by separation and extraction of hydrocarbons from distillate oil during reduced-pressure distillation of crude oil. These hydrocarbons are straight-chain hydrocarbons (normal paraffin). Paraffin wax is low-cost and can be mass produced because there is no need to perform extractive purification of a straight-chain hydrocarbon having a specific number of carbon atoms. For this reason, paraffin wax is preferably used as the higher hydrocarbon (A).

The type of hydrocarbons contained in the paraffin wax can be analyzed by a method such as gas chromatography. There are many paraffin waxes that contain not less than two types of hydrocarbons each having 20 to 35 carbon atoms. There are also many paraffin waxes that contain not less than two types of hydrocarbons each having 20 to 30 carbon atoms.

Specific examples of the paraffin wax encompass the following waxes manufactured by Nippon Seiro Co., Ltd.: paraffin wax 115 (melting point: 48°C), paraffin wax 120 (melting point: 50°C), paraffin wax 125 (melting point: 53°C), paraffin wax 130 (melting point: 56°C), paraffin wax 135 (melting point: 59°C), paraffin wax 140 (melting point: 61°C), paraffin wax 145 (melting point: 63°C), paraffin wax 150 (melting point: 66°C), paraffin wax 155 (melting point: 69°C), paraffin wax HNP-3 (melting point: 64°C), paraffin wax HNP-5 (melting point: 63°C), paraffin wax HNP-11 (melting point: 68°C), paraffin wax HNP-12 (melting point: 67°C), paraffin wax SP-0145 (melting point: 62°C), paraffin wax SP-01039 (melting point: 60°C), paraffin wax SP-3035 (melting point: 60°C), paraffin wax SP-3040 (melting point: 63°C), paraffin wax EMW-0001 (melting point: 49°C), paraffin wax EMW-0003 (melting point: 49°C), and paraffin wax Hi-Mic-2045 (melting point: 64°C). Examples of paraffin wax that can be suitably used as the higher hydrocarbon (A) encompass paraffin wax 115 (melting point: 48°C), paraffin wax 120 (melting point: 50°C), and paraffin wax 125 (melting point: 53°C), because these waxes solidify and melt sufficiently in the temperature range at which the heat storage material composition is used (for example, -20°C to 55°C). Paraffin wax 115 (melting point: 48°C) is particularly preferable as a paraffin wax that can be suitably used as the higher hydrocarbon (A). Note here that the melting points written in parentheses after the compound name were taken from a catalog from the manufacturer Nippon Seiro Co., Ltd.

Paraffin waxes such as paraffin wax 115 (melting point: 48°C), paraffin wax 120 (melting point: 50°C), paraffin wax 125 (melting point: 53°C), paraffin wax 130 (melting point: 56°C), paraffin wax 135 (melting point: 59°C), paraffin wax 140 (melting point: 61°C), paraffin wax 145 (melting point: 63°C), paraffin wax 150 (melting point: 66°C), paraffin wax HNP-3 (melting point: 64°C), paraffin wax HNP-5 (melting point: 63°C), paraffin wax HNP-11 (melting point: 68°C), and paraffin wax HNP-12 (melting point: 67°C) manufactured by Nippon Seiro Co., Ltd. satisfy the following: (a) they contain not less than two types of hydrocarbons having 20 to 35 carbon atoms; (b) they contain hydrocarbons having 20 to 35 carbon atoms at a weight ratio of not less than 50 weight% with respect to 100 weight% of the paraffin wax; and (c) they contain a hydrocarbon whose melting peak temperature in a DSC curve is not less than 35°C and not more than 70°C. As such, each the above paraffin waxes can be used alone (i.e., a single type can be used) as the higher hydrocarbon (A).

Paraffin waxes such as paraffin wax 115 (melting point: 48°C), paraffin wax 120 (melting point: 50°C), paraffin wax 125 (melting point: 53°C), paraffin wax 130 (melting point: 56°C), paraffin wax 135 (melting point: 59°C), and paraffin wax 140 (melting point: 61°C) manufactured by Nippon Seiro Co., Ltd. satisfy the following: (a) they contain not less than two types of hydrocarbons having 20 to 30 carbon atoms; (b) they contain hydrocarbons having 20 to 30 carbon atoms at a weight ratio of not less than 50 weight% with respect to 100 weight% of the paraffin wax; and (c) they contain a hydrocarbon whose melting peak temperature in a DSC curve is not less than 35°C and not more than 70°C. As such, each the above paraffin waxes can be used alone (i.e., a single type can be used) as a preferable example of the higher hydrocarbon (A).

The higher hydrocarbon (A) may be (a) a combination of at least two types of the above-described hydrocarbons, (b) a combination of one or more types of the above-described hydrocarbons and one or more types of the above-described paraffin waxes, or (c) a combination of one or more of the above-described paraffin waxes.

The higher hydrocarbon (A) may contain a hydrocarbon having 6 to 19 carbon atoms, and may contain a hydrocarbon having more than 35 carbon atoms. The present heat storage material composition may have a hydrocarbon having 1 to 5 carbon atoms. The higher hydrocarbon (A) may contain a hydrocarbon whose melting peak temperature in a DSC curve is in a range of not less than 20°C to less than 35°C.

The higher hydrocarbon (A) preferably has not less than two melting peaks in a DSC curve obtained by DSC measurement, in which: the not less than two melting peaks include a peak (a) in a range of not less than 35°C to not more than 70°C and a peak (b) in a range of not less than 20°C to less than 35°C; and an area ratio ((a)/(b)) of the area of the peak (a) to the area of the peak (b) is 95/5 to 70/30 (this area ratio hereinafter also referred to as a "peak area ratio (a)/(b)"). With the above configuration, the heat storage material composition that is obtained has the advantage that, in a temperature decreasing process during a temperature increase/decrease test, the temperature of the heat storage material composition decreases at a more constant rate when above the solidification temperature. As such, the heat storage material composition obtained can be suitably used for (a) even more stable storage and transport of a temperature control target article, such as a blood platelet preparation, whose controlled temperature is around 22.5°C, and (b) better maintaining a comfortable temperature in a living space. Note here that the area of a peak in a DSC curve refers to the area of a region between (i) a DSC curve that forms the peak and (ii) the baseline of the DSC curve. A detailed description of the change in temperature of the heat storage material composition in a temperature decreasing process during a temperature increase/decrease test is provided later in the section "[2-2. Physical Properties of Heat Storage Material Composition]".

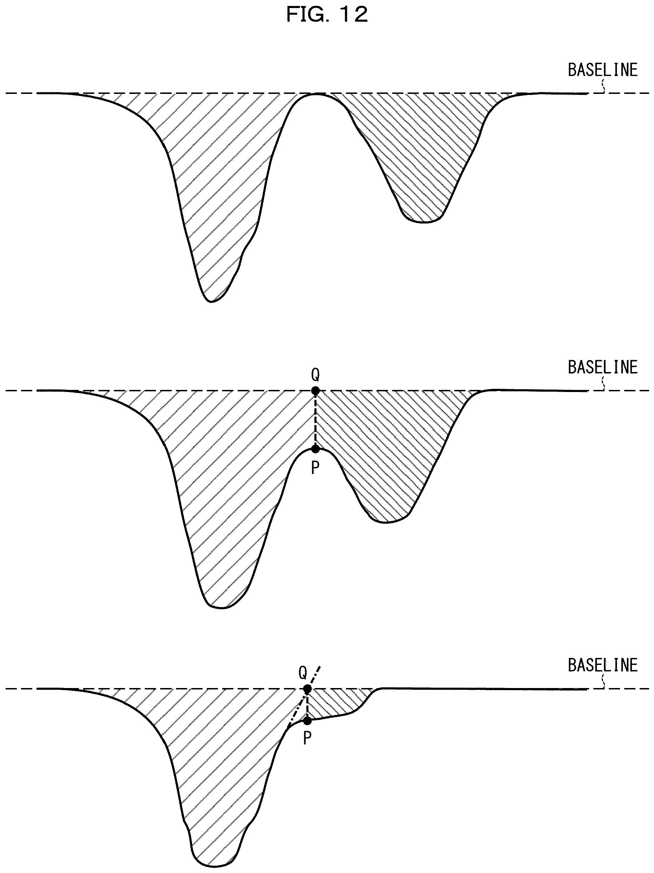

The following description will discuss the area of a peak in detail with reference to Fig. 12. Fig. 12 is a view schematically illustrating standards used for delimiting melting peaks (also simply "peaks") in a DSC curve when calculating the area of each melting peak. The two melting peaks in Fig. 12 are referred to here as a left peak and right peak. The area of the left peak is the area of the region indicated by lines slanted upward toward the right. The area of the right peak is the area of the region indicated by lines slanted upward toward the left.

As illustrated in the uppermost portion (uppermost tier) of Fig. 12, when the two peaks do not overlap, i.e., when both ends of the DSC curve forming each peak are in contact with the baseline of the DSC curve, the area of each peak refers to the area of a region between (i) the DSC curve forming the peak and (ii) the baseline of the DSC curve.

Considered next is a case where there is some overlap between the two peaks and a portion of the line (DSC curve) between the two peaks is closer to the baseline than are the peaks, i.e., a case where a valley exists between the two peaks, as illustrated in the middle portion (middle tier) of Fig. 12. In such a case, a point between the two peaks which is closest to the baseline is referred to here as "P". Given a perpendicular line drawn so as to pass through point P and the baseline, the intersection between the perpendicular line and the baseline is referred to as Q. In such a case, the area of each peak is the area of a region surrounded by (i) the DSC curve forming each peak, (ii) the baseline, and (iii) the line segment PQ.

Considered next is a case where there is some overlap between the two peaks, but no portion of the line between the two peaks is closer to the baseline than both peaks, i.e., a case where there is no valley between the two peaks, as illustrated in the bottommost portion (bottommost tier) of Fig. 12. In such a case, given that one of the two peaks is a main peak, and given a line extension formed by extending the DSC curve of the main peak so as to extend between the two peaks as a continuation of the main peak (see the dotted-and-dashed line in the bottommost portion of Fig. 12), the intersection between this line extension and the baseline is referred to as Q. Given a perpendicular line drawn so as to pass through point Q and the baseline, the intersection between the perpendicular line and the DSC curve is referred to as P. In such a case, the area of each peak is the area of a region surrounded by (i) the DSC curve forming each peak, (ii) the baseline, and (iii) the line segment PQ. Assuming a perpendicular line is drawn for each peak so as to pass through the apex (peak top) of that peak and the baseline, the term "main peak" refers to whichever peak results in the longest perpendicular line segment between the peak top and baseline. In the bottommost portion of Fig. 12, the main peak is the left peak.

Note that although two melting peaks (a left peak and right peak) are illustrated in Fig. 12, even if there are three or more melting peaks, the standards indicated in Fig. 12 can be applied to two adjacent peaks to find the area of each peak.

In the present heat storage material composition, the weight ratio of the higher hydrocarbon (A) included in the heat storage material composition is preferably not less than 5 weight% and not more than 19 weight%, more preferably not less than 6 weight% and not more than 15 weight%, even more preferably not less than 7 weight% and not more than 14 weight%, and particularly preferably not less than 9 weight% and not more than 12 weight%, with respect to 100 weight% of the heat storage material composition. With the above configuration, the heat storage material composition that is obtained has the advantage that, in a temperature decreasing process during a temperature increase/decrease test, the temperature of the heat storage material composition decreases at a more constant rate when above the solidification temperature.

### <Lauryl Alcohol (B)>

The present heat storage material composition contains lauryl alcohol (B). Lauryl alcohol is a type of higher alcohol.

In the present heat storage material composition, the weight ratio of the lauryl alcohol (B) contained in the heat storage material composition is preferably not less than 68 weight% and not more than 98 weight%, more preferably not less than 70 weight% and not more than 95 weight%, even more preferably not less than 75 weight% and not more than 93 weight%, and particularly preferably not less than 80 weight% and not more than 90 weight%, with respect to 100 weight% of the heat storage material composition. Such a configuration is better at bringing about the above-described advantages (1) to (4). With the above configuration, the heat storage material composition that is obtained also has the advantage that, in a temperature decreasing process during a temperature increase/decrease test, the temperature of the heat storage material composition decreases at a more constant rate when above the solidification temperature.

The higher hydrocarbon (A) and the lauryl alcohol (B) contained in the present heat storage material composition are preferably compatible with each other. Here, "compatible" means that, in a temperature increase/decrease test carried out at an environmental temperature at which the present heat storage material composition is used, a substance obtained by dissolving two substances in each other has a melting temperature that is always constant, and when this substance is in a melted state, there is no separation between solid phase and liquid phase.

The heat storage material composition in accordance with an embodiment of the present invention can be charged into e.g. a container or bag so as to form a heat storage material, as described later. This heat storage material can be used inside a transport container or a house. However, if the container or the like that shapes the heat storage material breaks during transportation or conveyance, or breaks due to deterioration over time, the heat storage material composition that was charged into the container or the like will leak out of the container or the like. In such a case, there is a risk that e.g. the following (a) to (c) will occur: (a) a temperature control target article will be contaminated and become unusable; (b) a living space will become contaminated and become unsuitable for living or carrying out activities; and/or (c) the heat storage material composition that has leaked from the container has a harmful effect on the environment.

Therefore, in order to minimize spillage of the heat storage material composition even in the event of breakage of a container or the like charged with the heat storage material composition, the heat storage material composition in accordance with an embodiment of the present invention preferably contains a thickener (also called a gelling agent) so that the heat storage material composition is in a solid form (including a gel-like form).

The present heat storage material composition contains the higher hydrocarbon (A) and the lauryl alcohol (B), and therefore may have a low moisture content. As such, the thickener used in the present heat storage material composition is preferably hydrophobic or amphiphilic.

Examples of such a thickener encompass: (a) a mixture of (a-1) fumed silica, precipitated silica, gel-like silica, and/or aluminum 2-ethylhexanoate and (a-2) a higher fatty acid such as lauric acid, myristic acid, palmitic acid, stearic acid, isostearic acid, behenic acid, undecylenic acid, oleic acid, linoleic acid, or linolenic acid; (b) a mixture of (b-1) fumed silica, precipitated silica, gel-like silica, and/or aluminum 2-ethylhexanoate and (b-2) an ester of a higher fatty acid such as lauric acid, myristic acid, palmitic acid, stearic acid, isostearic acid, behenic acid, undecylenic acid, oleic acid, linoleic acid, or linolenic acid; (c) an ester of a higher fatty acid such as lauric acid, myristic acid, palmitic acid, stearic acid, isostearic acid, behenic acid, undecylenic acid, oleic acid, linoleic acid, or linolenic acid; and (d) hydroxypropylcellulose, hydroxyethylcellulose, hydroxymethylcellulose, hydroxy propylmethylcellulose, carboxymethylcellulose, polyvinyl pyrrolidone, and carboxy vinyl polymers.

Out of the above-mentioned thickeners, hydroxypropylcellulose is preferable because it is amphiphilic and thus enables excellent stability in a gel obtained, and because it is environmentally friendly.

Most of typical compounds known as thickeners are effective for gelation of water but, problematically, are unsuitable for gelation of heat storage material compositions that contain no water (such as the present heat storage material composition). Using hydroxypropylcellulose as a thickener provides the advantage that, even in the case of the present heat storage material composition, which contains only a very small amount of moisture, the present heat storage material composition can (a) maintain excellent heat storage performance (high latent heat quantity) and (b) be sufficiently gelled without effects on melting behavior or solidification behavior.

When the present heat storage material composition contains a thickener, there are the advantages that (a) a solid phase and liquid phase will not separate in the heat storage material composition, even after a temperature increase/decrease test carried out in an environmental temperature set to be the presumed temperature at which the heat storage material composition will be used, and (b) it is possible to decrease the environmental impact of the heat storage material composition occurring when the heat storage material composition leaks due to breakage of e.g. a container or bag, and to decrease the workload when recovering the heat storage material composition that has leaked. The temperature increase/decrease test will be discussed in detail in the Examples.

In a case where the present heat storage material composition contains a thickener, the heat storage material composition can be gelled in an environment at a temperature equal to or higher than the melting temperature of the heat storage material composition. A heat storage material composition containing a thickener can undergo a phase transition from a solidified (solid) state to a melted (gel) state, or from a melted (gel) state to a solidified (solid) state.

The used amount (also referred to as "amount") of the thickener differs in terms of the appropriate range and optimal amount, depending on the type of thickener used. If hydroxypropylcellulose is used as the thickener, the thickener is used in an amount of preferably 2.0 weight% to 10.0 weight%, and more preferably 3.0 weight% to 7.0 weight%, with respect to 100 weight% of the heat storage material composition. Using the hydroxypropylcellulose in an amount of 2.0 weight% to 10.0 weight% with respect to the 100 weight% of the heat storage material composition makes it possible to obtain a transparent gel having low fluidity.

Other than the above-described components, the present heat storage material composition can also obtain, as necessary, substances such as a crystal nucleating agent (e.g., sodium tetraborate 10-hydrate, silicate salt, or cryolite), a phase separation inhibitor (e.g., oleic acid, sodium oleate, potassium oleate, potassium metaphosphate, sodium silicate, or potassium isostearate), a perfume, a colorant, an antimicrobial agent, a high molecular polymer, a surfactant, a thermally conductive substance, a reaction accelerator, a flame retardant, an aggregate, a buffering agent, a dispersant, a cross-linking agent, a pH adjuster, a preservative, a fungicide, an antimicrobial agent, and anti-algae agent, a humectant, a defoaming agent, an ultraviolet absorbent, an antioxidant, a light stabilizer, other organic compounds, and other inorganic compounds.

### [2-2. Physical Properties of Heat Storage Material Composition]

The "melting temperature" of the heat storage material composition refers, in a broad sense, to the temperature of the heat storage material composition when the heat storage material composition in a solid state begins to melt and liquefy. Note that the word "liquefy" encompasses the above-described "gelation". The "melting temperature" will be more specifically discussed with reference to the upper graph of Fig. 1. The upper graph of Fig. 1 schematically indicates the change in temperature (horizontal axis) of the heat storage material composition with respect to time (vertical axis) in a case where the heat storage material composition in a solidified state is placed in a thermostatic bath, and then the temperature of the thermostatic bath is increased at a constant rate from a low temperature (e.g., 15°C). In comparison with the temperature of the thermostatic bath which is increased at a constant rate, the temperature of the heat storage material composition, as indicated in the upper graph of Fig. 1, changes in the order of the following (a1) to (a3): (a1) the temperature of the heat storage material composition increases at a constant rate; (a2) once the temperature reaches temperature T₁, there is little change due to latent heat of the heat storage material composition, and the temperature of the heat storage material composition is maintained in a range from the temperature T₁ to a temperature T₂; and (a3) upon reaching the temperature T₂, the temperature of the heat storage material composition starts increasing again. Herein, a "melting temperature" is defined as a midpoint temperature T₃ between the temperature T₁ and the temperature T₂.

The "solidification temperature" of the heat storage material composition refers, in a broad sense, to the temperature of the heat storage material composition when the heat storage material composition in a liquid state begins to solidify. The "solidification temperature" will be more specifically discussed with reference to the lower graph of Fig. 1. The lower graph of Fig. 1 schematically indicates the change in temperature (horizontal axis) of the heat storage material composition with respect to time (vertical axis) in a case where the heat storage material composition in a melted state is placed in a thermostatic bath, and then the temperature of the thermostatic bath is decreased at a constant rate from a high temperature (e.g., 100°C). In comparison with the temperature of the thermostatic bath which is decreased at a constant rate, the temperature of the heat storage material composition changes, as indicated in the lower graph of Fig. 1, in the order of the following (b1) to (b3): (b1) the temperature of the heat storage material composition decreases to a temperature T₆ at a constant rate or substantially constant rate; (b2) after the temperature of the heat storage material composition has slightly increased from the temperature T₆ to the temperature T₄, there is little change due to the latent heat of the heat storage material composition, and the temperature is maintained in a range from the temperature T₄ to the temperature T₅, and (b3) upon reaching the temperature T₅, the temperature of the heat storage material composition begins decreasing again. Herein, a "solidification temperature" is defined as a midpoint temperature T₇ between the temperature T₄ and the temperature T₅. Herein, the difference between the melting temperature and the solidification temperature of the heat storage material composition is referred to as ΔT (°C). Note that in (b2) above, before taking on the temperature T₄, the heat storage material composition takes on the temperature T₆, which is lower than the temperature T₄. This indicates that the heat storage material composition is in a supercooled state when in a liquid state at the temperature T₆. Herein, the difference between temperature T₄ and the temperature T₆ (= T₄ - T₆) is referred to as a "degree of solidification point depression (°C)". Note that in a process of decreasing the temperature of the heat storage material composition, there are cases in which there is no region equivalent to (b2) above, i.e., no region in which the temperature is maintained. For example, the "second solidification behavior" of Comparative Example 15 described later corresponds to this. In such a case, because it is difficult to determine the temperature T₅, the temperature T₄ is considered to be the "solidification temperature". Note that the word "liquid" encompasses the above-described "gel".

The following description will discuss a case where, in the above-described stage (b1) in the lower graph of Fig. 1, the temperature of the heat storage material composition does not decrease at a constant rate to the temperature T₆, but rather decreases at a substantially constant rate. In such a case, after the temperature of the heat storage material composition decreases at a constant rate up to a certain time point, the rate of change in temperature temporarily becomes comparatively slower, and then, once again, the temperature decreases at a constant rate to the temperature T₆. The temperature of the heat storage material composition at the time point at which the rate of temperature change becomes comparatively slower depends on the makeup of the heat storage material composition, as does the length of time for which the rate of temperature change remains comparatively slower. The length of time for which the rate of temperature change remains comparatively slower is shorter than the length of time of the stage (b2) in the lower graph in Fig. 1, i.e., shorter than the length of time for which the temperature is maintained in the range from the temperature T₄ to the temperature T₅. Without being limited by a particular theory, it is presumed that, in a comparison between (i) a heat storage material composition whose temperature decreases to the temperature T₆ at a constant rate and (ii) a heat storage material composition whose temperature does not decrease at a constant rate to the temperature T₆, but rather decreases at a substantially constant rate, the former is able to maintain a predetermined melting temperature more stably and for a longer period of time. As such, in a temperature decreasing process during a temperature increase/decrease test, it is preferable for there to be a shorter length of time for which the rate of temperature range of the heat storage material composition is comparatively slower. In other words, in a temperature decreasing process during a temperature increase/decrease test, the temperature of the heat storage material composition preferably decreases at a more constant rate when above the solidification temperature.

Herein, the melting temperature and solidification temperature of the heat storage material composition are values measured by (i) placing a measurement test sample in a commercially available thermostatic bath equipped with a temperature control unit, (ii) increasing or decreasing the temperature of the thermostatic bath at a constant rate, and (iii) monitoring the temperature of the test sample with the use of a thermocouple during the increasing or decreasing of the temperature of the thermostatic bath.

The melting temperature and/or the solidification temperature of the heat storage material composition in accordance with an embodiment of the present invention is preferably around 22.5°C.

The melting temperature of the heat storage material composition in accordance with an embodiment of the present invention is preferably 21.5°C to 23.5°C, more preferably 21.8°C to 23.2°C, even more preferably 22.1°C to 22.9°C, even more preferably 22.4°C to 22.6°C, and particularly preferably 22.5°C.

The solidification temperature of the heat storage material composition in accordance with an embodiment of the present invention is preferably 21.5°C to 23.5°C, more preferably 21.8°C to 23.2°C, even more preferably 22.1°C to 22.9°C, even more preferably 22.4°C to 22.6°C, and particularly preferably 22.5°C.

The melting temperature and solidification temperature of the heat storage material composition in accordance with an embodiment of the present invention are preferably 21.5°C to 23.5°C, more preferably 21.8°C to 23.2°C, even more preferably 22.1°C to 22.9°C, even more preferably 22.4°C to 22.6°C, and particularly preferably 22.5°C.

The difference (ΔT) between the melting temperature and the solidification temperature of the heat storage material composition in accordance with an embodiment of the present invention is preferably as small as possible. Specifically, the ΔT of the heat storage material composition in accordance with an embodiment of the present invention is preferably not more than 1.0°C, more preferably not more than 0.8°C, and even more preferably not more than 0.5°C.

The degree of solidification point depression in accordance with an embodiment of the present invention is preferably as small as possible. Specifically, the degree of solidification point depression of the heat storage material composition in accordance with an embodiment of the present invention is preferably less than 1.5°C, more preferably not more than 1.3°C, even more preferably not more than 1.0°C, and particularly preferably not more than 0.5°C.

The heat storage material composition in accordance with an embodiment of the present invention preferably has one melting peak in a DSC curve obtained by DSC measurement, but may have two or more melting peaks. Considered below is a case in which the heat storage material composition in accordance with an embodiment of the present invention has two or more melting peaks in a DSC curve obtained by DSC measurement (such a case is hereinafter referred to as "Case A"). In Case A, assuming a perpendicular line is drawn for each of the plurality of melting peaks so as to pass through the apex (peak top) of that peak and the baseline, whichever peak results in the longest perpendicular line segment between the peak top and baseline is referred to as the "main peak". Peaks other than the main peak are referred to as sub-peaks. In Case A, the heat quantity of the sub-peak(s) is preferably not more than 13%, more preferably not more than 10%, more preferably not more than 8%, even more preferably not more than 5%, and particularly preferably not more than 3%, where 100% represents the total heat quantity (J/g) of the main peak and the sub-peak(s). The presence of two or more melting peaks as in Case A means that the heat quantity is dispersed. The heat quantity of the main peak and the heat quantity of the sub-peaks are inversely proportional. As such, an increase in the heat quantity of the sub-peaks causes a decrease in the heat quantity of the main peak. The heat quantity of the main peak can also be called the latent heat quantity at the melting temperature of the heat storage material composition. A decrease in the heat quantity of the main peak is also a decrease in the latent heat quantity at the melting temperature of the heat storage material composition, and therefore results in a decrease in the length of time the temperature is maintained at the melting temperature. As such, the heat quantity of the sub-peak(s) is preferably within the above-described ranges. Note that the heat quantity of each melting peak can be found from the area of each melting peak. The method of finding the area of a peak in a DSC curve of the heat storage material composition is similar to the method of finding the area of peaks in a DSC curve of the higher hydrocarbon (A), as already described with reference to Fig. 12.

### [2-3. Method of Producing Heat Storage Material Composition]

A method of preparing a heat storage material composition in accordance with an embodiment of the present invention is not limited to any particular method and can be any publicly-known method. For example, the heat storage material composition can be prepared by using e.g. a mixer to mix the higher hydrocarbon (A), the lauryl alcohol (B), and optionally, optional components such as a thickener.

### [3. Heat Storage Material]

In an embodiment of the present invention, a heat storage material including the above-described heat storage material composition is provided. A heat storage material in accordance with an embodiment of the present invention need only include the present heat storage material composition. Other components, materials, and the like of the heat storage material are not limited.

A heat storage material composition in accordance with an embodiment of the present invention is usable as a latent-heat-type heat storage material because the heat storage material composition forming the heat storage material absorbs thermal energy when undergoing a phase transition from a solidified (solid) state to a melted (liquid) state (in other words, when melting). As such, the heat storage material in accordance with an embodiment of the present invention can also be regarded as a "melt-type and latent-heat-type heat storage material". The heat storage material composition in accordance with an embodiment of the present invention is also usable as a latent-heat-type heat storage material because the heat storage material composition forming the heat storage material releases thermal energy when undergoing a phase transition from a melted (liquid) state to a solidified (solid) state (in other words, when solidifying). As such, the heat storage material in accordance with an embodiment of the present invention can also be regarded as a "solidification-type and latent-heat-type heat storage material". The heat storage material in accordance with an embodiment of the present invention can also be regarded as a "latent-heat-type heat storage material".

Herein, the melting temperature of the heat storage material refers to the temperature of the heat storage material when the phase of a main part of the heat storage material changes from a solidified (solid) state to a melted (liquid) state. Herein, the solidification temperature of the heat storage material refers to the temperature of the heat storage material when the phase of a main part of the heat storage material changes from a melted (liquid) state to a solidified (solid) state. Note here that "the phase of a main part of the heat storage material" refers to the phase of a main part of the heat storage material composition forming the heat storage material. As a reference, the phase of a main part of the heat storage material is the phase of a part of the heat storage material composition forming the heat storage material, which part is more than 50 weight% of the total amount (100 weight%) of the heat storage material composition. For example, if the heat storage material composition forming the heat storage material is 80 weight% solid and 20 weight% liquid, the phase of the heat storage material is considered to be solid (a solidified state). Here, "phase" refers to a typical state: solid, liquid, gel, or gas. The present invention mainly uses solid and liquid states, or solid and gel states.

The heat storage material in accordance with an embodiment of the present invention can be obtained by charging the above-described heat storage material composition into e.g. a container or a bag.

Containers and bags which can be used in an embodiment of the present invention are not particularly limited, provided that they can house the heat storage material composition. The container or bag may be soft and have flexibility, or may be rigid and have no flexibility. The container or bag is preferably made from a material that (i) is non-permeable with respect to the heat storage material composition and (ii) has a higher melting point than the heat storage material composition. In some cases, an internal force (internal pressure) may be applied to the container or bag due to volumetric expansion occurring due to solidification when the heat storage material composition solidifies from a liquid (or gel) to a solid. The heat storage material may in some cases be used as a building material, when used to a living environment for the purpose of maintaining a comfortable temperature in a living space. In such a case, the container or bag forming the heat storage material may receive an external impact. As such, the container or bag preferably has excellent mechanical strength, such as tearing strength and breaking strength.

Examples of materials for the container or bag encompass metals and resins (for example, synthetic resins).

Examples of the metals encompass copper, aluminum, iron, brass, zinc, magnesium, and nickel.

Examples of the resins encompass polypropylene resin, polyvinyl chloride resin, polycarbonate resin, nylon resin, polyethylene resin, polyethylene terephthalate (PET) resin, polystyrene resin, and polyester resin.

The container or bag may be made of a material consisting of only one component. The container or bag may be made of a material obtained by combining two or more components, in order to increase heat-resistance, strength, and barrier properties.

Examples of the material obtained by combining two or more components encompass materials having a multi-layered structure. Examples of the multi-layered structure encompass (a) a multi-layered structure in which a metal layer made of e.g. aluminum is laminated onto a layer made of a thermoplastic resin, and (b) a sheet material, having a layer structure, in which metal layers made of e.g. aluminum are inserted between a plurality of layers of thermoplastic resin.

If a material having a multi-layered structure is used as the material of the container or bag, the innermost layer, i.e., a layer that comes in contact with the heat storage material composition is preferably made of resin, because resin has favorable corrosion resistance with respect to the heat storage material composition.

The container and bag are not particularly limited, but examples encompass: olefin materials such as Midea manufactured by Tatsuno Chemical Industries Inc. and EMMA Soft manufactured by Okamoto Industries, Inc.; vinyl chloride materials such as the Tarpaulin Series manufactured by Kanbo Pras Corporation; and aluminum laminated films such as those manufactured by Keihan Cellophane Co., Ltd., MA Packaging Co., Ltd., and Showa Denko Packaging Co., Ltd. Out of these examples, a multi-layered laminated film having good barrier properties is favorable, because such a film is not prone to bleeding of its contents (i.e., not prone to exudation of its contents). Examples of such a laminated film encompass aluminum laminated films manufactured by e.g. Keihan Cellophane Co., Ltd., MA Packaging Co., Ltd., and Showa Denko Packaging Co., Ltd.

A shape of the container or bag is not limited to any particular one. However, from the viewpoint of efficiently exchanging heat between the heat storage material composition and a temperature control target article or a space around the temperature control target article via the container or bag, the container or bag preferably is preferably shaped so as to be thin and have a large surface area. The heat storage material can be produced by charging such a container or a bag with the heat storage material composition.

Note that more specific examples of the container or bag encompass those disclosed in Japanese Patent Application Publication Tokukai No. 2015-78307,

The melting temperature and the solidification temperature of the heat storage material in accordance with an embodiment of the present invention can be considered the same as the melting temperature and the solidification temperature, respectively, of the heat storage material composition included in the heat storage material. The melting temperature and/or the solidification temperature of the heat storage material in accordance with an embodiment of the present invention is preferably around 22.5°C.

The heat storage material in accordance with an embodiment of the present invention has a melting temperature and a solidification temperature which are both around 22.5°C, which is a temperature range at which humans can carry out activities comfortably. As such, the heat storage material in accordance with an embodiment of the present invention can be used as, e.g., a floor material, a wall material, a floor base material, a wall base material, and a ceiling base material, in order to stably maintain a temperature of 20.5°C to 24.5°C in a living space. The heat storage material in accordance with an embodiment of the present invention can be regarded as a heat storage material for a living environment.

### [4. Transport Container]

In an embodiment of the present invention, a heat storage material including the above-described heat storage material composition is provided. A transport container in accordance with an embodiment of the present invention only needs to include the above-described heat storage material in accordance with an embodiment of the present invention. The transport container is not particularly limited with regard to e.g. other configurations or materials.

Fig. 2 illustrates an example of the heat storage material and an example of the transport container in accordance with an embodiment of the present invention. The upper diagram in Fig. 2 is a perspective view schematically illustrating a heat storage material 10 in accordance with an embodiment of the present invention. The lower diagram in Fig. 2 is an exploded perspective view schematically illustrating a transport container 1 in accordance with an embodiment of the present invention.

As illustrated in Fig. 2, the heat storage material 10 in accordance with the present embodiment has an opening that is blocked by a cap 11 of the heat storage material. A heat storage material composition 20 in accordance with an embodiment of the present invention is charged into the cold storage material 10 through the opening. The heat storage material 10 can be used while being housed or placed in a thermally insulative container 40.

A material of the heat storage material 10 and a material of the cap 11 for the heat storage material are not limited to any specific materials, and can be any conventionally known materials. Regarding the material of the heat storage material 10 and the material of the cap 11 for the heat storage material, the descriptions about the container or bag in the section [3. Heat Storage Material] may be applied as appropriate.

The thermally insulative container 40 includes, for example, a box 41 and a lid 42 which fits an opening 410 of the box, so as to be thermally insulative.

A material of the thermally insulative container 40 is not limited to any specific material, provided that the material is thermally insulative. A foamed plastic can be suitably used as the material of the thermally insulative container 40, because it is lightweight, inexpensive, and can prevent dew condensation. A vacuum thermal insulation material can be suitably used as the material of the thermally insulative container 40, because it is very highly thermally insulative, maintains a temperature for a long period of time, and can prevent dew condensation. Specific examples of the foamed plastic encompass foamed polyurethane, foamed polystyrene, foamed polyethylene, foamed polypropylene, foamed AS resin, and foamed ABS resin. Examples of the vacuum thermal insulation material include vacuum thermal insulation materials whose cores are made of, e.g., silica powder, glass wool, or glass fiber. The thermally insulative container 40 can be constituted by a combination of the foamed plastic and the vacuum thermal insulation material. In such a case, a thermally insulative container 40 having a high thermal insulation performance can be obtained by, for example, (i) covering, with the vacuum thermal insulation material, an outer surface or an inner surface of each of the box 41 and the lid 42 that are made of foamed plastic, or (ii) embedding the vacuum thermal insulation material in walls constituting each of the box 41 and the lid 42 that are made of foamed plastic.

As a more specific example, the thermally insulative container 40 described above can be configured as disclosed in Japanese Patent Application Publication Tokukai No. 2015-78307,

The upper diagram in Fig. 3 is a perspective view schematically illustrating an inside of the transport container 1. The lower diagram in Fig. 3 is a cross-sectional view schematically illustrating a cross-section taken along the line A-A in the upper perspective view in Fig. 3.

As illustrated in Fig. 2, (i) the thermally insulative container 40 includes the box 41 and the lid 42, and (ii) the transport container 1 in accordance with an embodiment of the present invention includes the thermally insulative container 40, the heat storage material 10, and spacers 6. As illustrated in Figs. 2 and 3, the transport container 1 in accordance with an embodiment of the present invention can include the spacers 6 which, when the heat storage material 10 is housed or placed in the transport container 1, are intended to (1) fill spaces between (i) the heat storage material 10 and (ii) lateral surfaces 412 of the box, a bottom surface 411 of the box, and a surface of the lid 42 covering a space in the box and (2) secure a space 5 for accommodating a temperature control target article as illustrated in Fig. 3.

The material of the spacers 6 is not limited to any specific material. Possible examples of the material encompass polyurethane, polystyrene, polyethylene, polypropylene, AS resin, ABS resin, and a foamed plastic obtained by foaming any of these resins.

In an embodiment of the present invention, a pair of spacers 6 is placed in the thermally insulative container 40 such that the spacers 6 face each other. Providing the spacers 6 in the transport container 1 in accordance with an embodiment of the present invention fixes the position of the heat storage material 10. This makes packing easier. The size and number of spacers 6 included in the transport container 1 are not particularly limited, and can be set as appropriate according to, for example, the size of the transport container 1, the size of the heat storage material 10, and the size of the temperature control target article.

Although the transport container 1 includes ten units of the heat storage material 10 in Figs. 2 and 3, the number of units of the heat storage materials included in the transport container 1 is not particularly limited, provided that the number is at least one. The number of units of the heat storage material 10 included in the transport container 1 is preferably not less than two, more preferably not less than four, even more preferably not less than six, and particularly preferably not less than ten, from the viewpoint of storing or transporting a temperature control target article at a controlled temperature for a long period of time and/or with stability. The number of units of the heat storage material 10 included in the transport container 1 may be selected as appropriate according to, for example, the size of the heat storage material 10, a period of time for which the temperature control target article is to be stored or transported, and an ambient temperature during storage or transportation of the temperature control target article.

In Figs. 2 and 3, the transport container 1 includes one space 5 for accommodating the temperature control target article. However, any number of spaces 5 can be included in the transport container 1, provided that the number is at least one. The transport container 1 may include a plurality of spaces 5. For example, one space 5 may be divided into separate spaces by placing the heat storage material 10 and/or the spacer(s) 6 in the space 5.

With the transport container in accordance with an embodiment of the present invention, it is possible to store or transport an article that requires temperature control (i.e., a temperature control target article), while the article is stably maintained at a temperature around 22.5°C for a long period of time, regardless of an ambient temperature. The transport container in accordance with an embodiment of the present invention can be suitably used to store or transport various kinds of articles requiring temperature control such as cells, pharmaceutical products, medical devices, test specimens, organs, chemicals, semiconductor-related members, and food. Semiconductor-related members are extremely sensitive to e.g. warpage due to sudden changes in temperature, and are preferably managed at a temperature range around room temperature (preferably a temperature range of 15°C to 30°C, more preferably 20°C to 25°C). As such, the transport container in accordance with an embodiment of the present invention can be used suitably for storage or transport of reticles, mask blanks, and pellicles, and can be further suitably used for storage or transport of reticles for EUV, mask blanks for EUV, and pellicles for EUV. Out of temperature control target articles which the transport container in accordance with an embodiment of the present invention can be used for, the transport container can be used particularly suitably for storage or transport of a blood platelet preparation whose preferable controlled temperature is around 22.5°C. The transport container in accordance with an embodiment of the present invention includes a container and the heat storage material having a heat storage material composition in accordance with an embodiment of the present invention inside the container. As such, the transport container makes it possible to stably maintain the temperature inside the container at around 22.5°C even in an environment where the temperature outside the container is -10°C to 35°C.

### [5. Method of Using Heat Storage Material Composition]

One embodiment of the present invention is a method of using a heat storage material composition, including the steps of: placing the heat storage material composition described in the section [2. Heat Storage Material Composition] into a container; and maintaining a temperature of 21.5°C to 23.5°C inside the container, in an environment in which the temperature outside the container is -10°C to 35°C. The method of using the present heat storage material composition can be regarded as a method of maintaining a temperature.

In the above placement step, it is preferable to first form a heat storage material by charging the heat storage material composition into e.g. a container or bag, and then place the heat storage material into another container. In other words, the above placement step may be a step of placing the heat storage material described in the section [3. Heat Storage Material] into a container. In the above placement step, the container into which the heat storage material composition or the heat storage material is placed is preferably the thermally insulative container described in the section [4. Transport Container]. In other words, the placement step can also be described as a step of preparing the transport container described in the section [4. Transport Container].

In the above placement step, the phase of the heat storage material composition or the heat storage material to be placed into the container is a solidified (solid) state or a melted (liquid) state. The phase can be selected as appropriate in accordance with the temperature outside the container (also referred to as the ambient temperature). For example, if the ambient temperature is 30°C, which is higher than the melting temperature of the heat storage material composition, the phase of the heat storage material composition or the heat storage material placed in the container is a melted (liquid) state. Conversely, if the ambient temperature is 0°C, which is lower than the melting temperature of the heat storage material composition, the phase of the heat storage material composition or the heat storage material placed in the container is a solidified (solid) state. The above configuration utilizes latent heat accompanying a phase transition of the heat storage material composition or the heat storage material and therefore makes it possible to maintain a temperature of 21.5°C to 23.5°C inside the container in the maintaining step. In the above placement step, the method of solidifying or melting the heat storage material composition or the heat storage material to be placed in the container is not particularly limited.

### [6. Building]

One embodiment of the present invention is a method of producing a building, including the steps of: placing the heat storage material composition described in the section [2. Heat Storage Material Composition] into a living space; and maintaining a temperature of 20.5°C to 24.5°C inside the living space.

In the above placement step, it is preferable to first form a heat storage material by charging the heat storage material composition into e.g. a container or bag, and then place the heat storage material into the living space. In other words, the above placement step may be a step of placing the heat storage material (heat storage material for a living environment) described in the section [3. Heat Storage Material] into a living space. In the above placement step, the location at which the heat storage material composition or the heat storage material is placed in the living space is not particularly limited, but may be, for example, a wall, a floor, a ceiling, and/or a roof.

The following description will discuss an aspect in which, in the above maintaining step, a temperature of 20.5°C to 24.5°C is maintained inside the living space by the heat storage material composition or the heat storage material placed therein.

Considered here is an example case where the ambient temperature reaches a high of 35°C in the daytime and a low of 20°C at night (for example, during summer in the northern hemisphere). The heat storage material composition or the heat storage material solidifies at night while the ambient temperature is less than the melting temperature of the heat storage material composition. In doing so, the heat storage material composition or the heat storage material releases heat into or outside the living space. Thereafter, in the daytime, the heat storage material composition or the heat storage material which has solidified melts while the ambient temperature exceeds the melting temperature of the heat storage material composition. In doing so, the heat storage material composition or the heat storage material absorbs external heat and therefore makes it possible to reduce the inflow of heat into the living space from outside. As such, a temperature of 20.5°C to 24.5°C is maintained in the living space.

Considered next is a case where the ambient temperature reaches a high of 36°C in the daytime and a low of 27°C at night (for example, during summer in the northern hemisphere). In this case, it is assumed that a room temperature of 22°C is maintained during the day with use of a cooling apparatus. In this case, the heat storage material composition or the heat storage material is solidified in the daytime, because the temperature in the living space is 22°C. Thereafter (after the cooling apparatus has been turned off), the heat storage material composition or the heat storage material gradually melts at night, while the ambient temperature is 27°C. In doing so, the heat storage material composition or the heat storage material absorbs external heat and therefore makes it possible to reduce the inflow of heat into the living space from outside. As such, a temperature of 20.5°C to 24.5°C is maintained in the living space.

Considered next is a case where the ambient temperature reaches a high of 10°C in the daytime and a low of -5°C at night (for example, during winter in the northern hemisphere). In this case, it is assumed that a room temperature of 25°C is maintained during the day with use of a heater. In this case, the heat storage material composition or the heat storage material is melted in the daytime, because the temperature in the living space is 25°C. Thereafter (after the heater has been turned off), the heat storage material composition or the heat storage material gradually solidifies at night, while the ambient temperature is -5°C. In doing so, the heat storage material composition or the heat storage material releases heat into the living space, and therefore maintains a temperature of 20.5°C to 24.5°C inside the living space.

Thus, as described above, a building produced by the production method of an embodiment of the present invention has the advantages that (a) it is possible to reduce the load on the cooling apparatus or heater because the heat storage material composition is able to repeatedly stably maintain a temperature in a living temperature range, and (b) it is possible to provide a living space in which humans can comfortably live or carry out activities.

Embodiments of the present invention may be configured as below.
[1] A heat storage material composition including: a higher hydrocarbon (A); and lauryl alcohol (B), the heat storage material composition satisfying all of the following conditions (1) to (5): (1) a weight ratio of the higher hydrocarbon (A) included in the heat storage material composition is not less than 2 weight% and not more than 22 weight% with respect to 100 weight% of the heat storage material composition; (2) the higher hydrocarbon (A) includes not less than two types of hydrocarbons having 20 to 35 carbon atoms, a weight ratio of the not less than two types of the hydrocarbons having 20 to 35 carbon atoms included in the higher hydrocarbon (A) being not less than 50 weight% with respect to 100 weight% of the total amount of the higher hydrocarbon (A) included in the heat storage material composition; (3) the higher hydrocarbon (A) includes a hydrocarbon whose melting peak temperature in a DSC curve is not less than 35°C and not more than 70°C; (4) a difference (ΔT) between a melting temperature of the heat storage material composition and a solidification temperature of the heat storage material composition is not more than 1.0°C; and (5) the heat storage material composition has a degree of solidification point depression of less than 1.5°C.
[2] The heat storage material composition according to [1], wherein the higher hydrocarbon (A) includes not less than two types of hydrocarbons having 20 to 30 carbon atoms, a weight ratio of the not less than two types of the hydrocarbons having 20 to 30 carbon atoms included in the higher hydrocarbon (A) being not less than 50 weight% with respect to 100 weight% of the total amount of the higher hydrocarbon (A) included in the heat storage material composition.
[3] The heat storage material composition according to [1] or [2], wherein: the higher hydrocarbon (A) has not less than two melting peaks in a DSC curve, the not less than two melting peaks including a peak (a) in a range of not less than 35°C to not more than 70°C and a peak (b) in a range of not less than 20°C to less than 35°C; and a ratio of an area of the peak (a) to an area of the peak (b) is 95/5 to 70/30.
[4] The heat storage material composition according to any one of [1] to [3], wherein the melting temperature of the heat storage material composition is in a range of 21.5°C to 23.5°C.
[5] A method of using a heat storage material composition, including the steps of: placing the heat storage material composition according to any one of [1] to [4] into a container; and maintaining a temperature of 21.5°C to 23.5°C inside the container, in an environment in which the temperature outside the container is -10°C to 35°C.
[6] A method of producing a building, including the steps of: placing the heat storage material composition according to any one [1] to [4] into a living space; and maintaining a temperature of 20.5°C to 24.5°C inside the living space.

Embodiments of the present invention may be configured as below.
[1] A heat storage material composition including: a higher hydrocarbon (A); and lauryl alcohol (B), the heat storage material composition satisfying all of the following conditions (1) to (3): (1) a weight ratio of the higher hydrocarbon (A) included in the heat storage material composition is not less than 2 weight% and not more than 22 weight% with respect to 100 weight% of the heat storage material composition; (2) the higher hydrocarbon (A) includes not less than two types of hydrocarbons having 20 to 30 carbon atoms, a weight ratio of the not less than two types of the hydrocarbons having 20 to 30 carbon atoms included in the higher hydrocarbon (A) being not less than 50 weight% with respect to 100 weight% of the total amount of the higher hydrocarbon (A) included in the heat storage material composition; and (3) the higher hydrocarbon (A) includes a hydrocarbon whose melting peak temperature in a DSC curve is not less than 35°C and not more than 70°C.
[2] The heat storage material composition according to [1], wherein: the higher hydrocarbon (A) has not less than two melting peaks in a DSC curve, the not less than two melting peaks including a peak (a) in a range of not less than 35°C to not more than 70°C and a peak (b) in a range of not less than 20°C to less than 35°C; and a ratio of an area of the peak (a) to an area of the peak (b) is 95/5 to 70/30.
[3] The heat storage material composition according to [1] or [2], wherein a melting temperature of the heat storage material composition is in a range of 21.5°C to 23.5°C.
[4] The heat storage material composition according to any one of [1] to [3], wherein a difference (ΔT) between the melting temperature of the heat storage material composition and a solidification temperature of the heat storage material composition is not more than 1.0°C.
[5] The heat storage material composition according to any one of [1] to [4], wherein the heat storage material composition has a degree of solidification point depression of less than 1.5°C.
[6] A method of using a heat storage material composition, including the steps of: placing the heat storage material composition according to any one of [1] to [5] into a container; and maintaining a temperature of 21.5°C to 23.5°C inside the container, in an environment in which the temperature outside the container is -10°C to 35°C.
[7] A method of producing a building, including the steps of: placing the heat storage material composition according to any one [1] to [5] into a living space; and maintaining a temperature of 20.5°C to 24.5°C inside the living space.

### Examples

The following raw materials were used in Examples and Comparative Examples. With regard to paraffin wax, the melting points written in parentheses after the compound names are taken from a catalog from Nippon Seiro Co., Ltd., which manufactured the paraffin wax. For substances other than paraffin wax, the melting points written in parentheses after the compound names are taken from a chemistry handbook.
- Higher hydrocarbons:
   n-octadecane (manufactured by JXTG Nippon Oil 8v Energy Corporation; product name: TS Paraffin TS8; melting point: 28.2°C)
   n-eicosane (manufactured by JXTG Nippon Oil 8v Energy Corporation; product name: TS Paraffin TS20; melting point: 36.8°C)
   n-docosane (manufactured by Tokyo Chemical Industry Co., Ltd.; melting point: 44.4°C)
   Paraffin wax A (manufactured by Nippon Seiro Co., Ltd.; product name: Paraffin Wax 115; melting point: 48°C)
   Paraffin wax B (manufactured by Nippon Seiro Co., Ltd.; product name: Paraffin Wax 120; melting point: 50°C)
   Paraffin wax C (manufactured by Nippon Seiro Co., Ltd.; product name: Paraffin Wax 125; melting point: 53°C)
   Paraffin wax D (manufactured by Nippon Seiro Co., Ltd.; product name: Paraffin Wax HNP-11; melting point: 68°C)

A DSC curve was obtained using a DSC for the higher hydrocarbons (except for n-octadecane) used in the Examples and Comparative Example, in a measurement in which the temperature was lowered from 80°C to 0°C at a rate of 3.0°C/min, and raised from 0°C to 80°C at the same rate. Regarding the melting behavior in the DSC curve thus obtained, the above-described peak area ratio (a)/(b) was measured. Table 1 indicates the results of the measurement. Note that the paraffin waxes A, B, C, and D can be regarded as being the higher hydrocarbon (A) in an embodiment of the present invention.
- Higher alcohols:
   1-decanol (manufactured by Kao Corporation; product name: Kalcol 1098; melting point: 6.9°C)
   Lauryl alcohol (manufactured by Kao Corporation; product name: Kalcol 2098; melting point: 23.5°C)
   Myristyl alcohol (manufactured by Kao Corporation; product name: Kalcol 4098: melting point: 38.3°C)

**[Table 1]**

| | | Peak temp. (°C) of peak (a) (peak at 35°C to 70°C) | Peak temp. (°C) of peak (b) (peak at 20°C to less than 35°C) | Area ratio ((a)/(b)) of peak (a) to peak (b) |
|---|---|---|---|---|
| Higher hydrocarbon | Paraffin wax A | 49.2 | 32.3, 26.3 | 78/22 |
| | Paraffin wax B | 51.2 | 34.0, 29.7 | 81/19 |
| | Paraffin wax C | 53.8 | 33.2 | 78/22 |
| | Paraffin wax D | 69.3, 60.6 | - | 100/0 |
| | Eicosane | 37.9 | - | 100/0 |
| | Docosane | 45.9, 44.0 | - | 100/0 |

| | | | | |
|---|---|---|---|---|
| Note: In the above table, "temp." stands for "temperature". | | | | |

Measurements and evaluations in the Examples and Comparative Examples were carried out using the following conditions and methods.

### <Melting Temperature>

A temperature increase/decrease test was carried out for the heat storage material composition using the following procedure: (i) the heat storage material composition was charged into a polypropylene tube, along with a thermocouple, and then the polypropylene tube was placed in a thermostatic bath (manufactured by Scinics Corporation; Cool Mini Bock PB-105) so as to stand still; (ii) the temperature of the thermostatic bath was raised or lowered within a temperature range of 15°C to 100°C and at an increase/decrease rate of 0.5°C/min, so as to repeatedly solidify and then melt the heat storage material composition.

The change in temperature of the heat storage material composition during the temperature increase/decrease test was monitored with use of the thermocouple. A graph was made by plotting the temperature of the heat storage material composition versus the time during which the heat storage material composition was in the thermostatic bath, the temperature being as observed in the process of increasing the temperature of the thermostatic bath (in the process of melting the heat storage material composition) in the temperature increase/decrease test. The upper graph in Fig. 1 is a schematic representation of this graph indicating change in temperature during the process of melting the heat storage material composition. The melting temperature of the heat storage material composition was determined from the graph that was made, based on the definitions provided in the description of the upper graph of Fig. 1.

### <Solidification Temperature, Difference (ΔT) Between Melting Temperature and Solidification Temperature, and Degree of Solidification Point Depression>

A graph was made by plotting the temperature of the heat storage material composition versus the time during which the heat storage material composition was in the thermostatic bath, the temperature being as observed in the process of decreasing the temperature of the thermostatic bath (in the process of solidifying the heat storage material composition) in the temperature increase/decrease test. The lower graph in Fig. 1 is a schematic representation of this graph indicating change in temperature during the process of solidifying the heat storage material composition. From the graph thus made, the following were determined, based on the definitions provided in the description of the lower graph of Fig. 1: (a) the solidification temperature of the heat storage material composition, (b) the difference (ΔT) between the melting temperature and the solidification temperature of the heat storage material composition, and (c) the degree of solidification point depression exhibited by the heat storage material composition. The degree of solidification point depression was further evaluated as follows:
Small degree of supercooling ("Good" (G)): a degree of solidification point depression of not more than 1.0°C.
Moderate degree of supercooling ("Fair" (F)): a degree of solidification point depression which is greater than 1.0°C but less than 1.5°C. Large degree of supercooling ("Poor" (P)): a degree of solidification point depression of not less than 1.5°C.

### <Differential Scanning Calorimeter (DSC) Measurement>

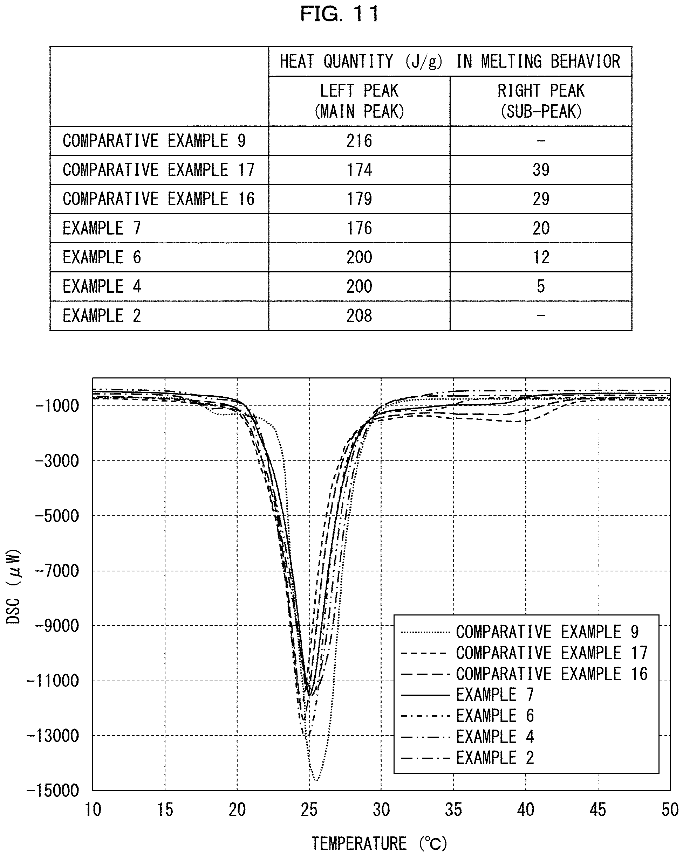

A differential scanning calorimeter (manufactured by Seiko Instruments Inc., SII EXSTAR6000 DSC) was used to carry out a DSC measurement, and the melting behavior and solidification behavior of the higher hydrocarbon or the heat storage material composition was analyzed. The results are indicated in Table 1, Fig. 11, Table 3, and Figs. 4 and 5. Temperature increase and decrease conditions used in the DSC measurement are as follows. With regard to Table 1 and Fig. 11, the temperature of the higher hydrocarbon or the heat storage material composition was decreased from 80°C to 0°C at a rate of 3.0°C/min, and then increased from 0°C to 80°C at the same rate. With regard to Table 3 and Figs. 4 and 5, the temperature of the higher hydrocarbon or the heat storage material composition was decreased from 60°C to -20°C at a rate of 2.0°C/min, and then increased from 60°C to -20°C at the same rate.

### <Usability Determination>

Each heat storage material composition was evaluated for usability based on the criteria below, to determine whether the heat storage material composition is suitable for use in (a) stably storing or transporting a temperature control target article whose controlled temperature is around 22.5°C, such as a blood platelet preparation, and (b) maintaining a comfortable temperature in a living space. Good (G): Satisfies all of (i) to (iii) below and has a degree of solidification point depression of not more than 1.0°C.
Fair (F): Satisfies all of (i) to (iii) below and has a degree of solidification point depression that is greater than 1.0°C but less than 1.5°C.
Poor (P): One or more of (i) to (iii) below is not satisfied.

(i): Has a degree of solidification point depression of less than 1.5°C.
(ii): Exhibits a difference (ΔT) between melting temperature and solidification temperature that is not more than 1.0°C.
(iii): Has a melting temperature and a solidification temperature which are both within the range of 21.5°C to 23.5°C.

### (Examples 1 to 10)

Prepared as the heat storage material composition were solutions containing the higher hydrocarbons and the higher alcohols indicated in Tables 2 and 3, at the weight% indicated in Tables 2 and 3. Each of Examples 1 to 10 includes (i) one of the paraffin waxes A, B, C, and D and (ii) lauryl alcohol, and therefore includes the higher hydrocarbon (A) and the lauryl alcohol (B) in accordance with an embodiment of the present invention.

For each of the obtained Examples 1 to 10, the above temperature increase/decrease test was carried out to measure and evaluate the melting temperature, the solidification temperature, the difference (ΔT) between the melting temperature and the solidification temperature, and the degree of solidification point depression. The results are indicated in Tables 2 and 3. Note that in Tables 2 and 3, Examples 3 and 4 are heat storage material compositions that have the same makeup but which were prepared independently of each other. For some of the Examples, the graph of temperature change of the heat storage material composition obtained from the temperature increase/decrease test is shown in Figs. 7, 9, and 10. For some of the Examples, the above-described DSC measurement was carried out. Fig. 11 indicates the DSC curves obtained by the DSC measurements and the melting peak heat quantity found from the DSC curves.

**[Table 2]**

| | | | Ex. 1 | Ex. 2 | Ex. 3 | Ex. 4 | Ex. 5 |
|---|---|---|---|---|---|---|---|
| Higher hydrocarbon | Paraffin wax A | Weight% | 3 | 5 | 10 | 10 | 11 |
| | Paraffin wax B | | - | - | - | - | - |
| | Paraffin wax C | | - | - | - | - | - |
| | Paraffin wax D | | - | - | - | - | - |
| Higher alcohol | Lauryl alcohol | | 97 | 95 | 90 | 90 | 89 |
| Evaluation results | Melting temp. | °C | 22.8 | 22.6 | 22.0 | 22.0 | 22.1 |
| | Solidification temp. | | 23.4 | 23.3 | 22.5 | 22.8 | 22.6 |
| | Difference (ΔT) between melting temp. and solidification temp. | | 0.6 | 0.7 | 0.5 | 0.8 | 0.5 |
| | Degree of solidification point depression | | 1.3 | 0.7 | 1.0 | 0.9 | 1.0 |
| | | - | F | G | G | G | G |
| Usability determination | | - | F | G | G | G | G |

| | | | | | | | |
|---|---|---|---|---|---|---|---|
| Note: In the above table, "temp." stands for "temperature" and "Ex." stands for "Example". | | | | | | | |

**[Table 3]**

| | | | Ex. 6 | Ex. 7 | Ex. 8 | Ex. 9 | Ex. 10 |
|---|---|---|---|---|---|---|---|
| Higher hydrocarbon | Paraffin wax A | Weight% | 15 | 20 | - | - | - |
| | Paraffin wax B | | - | - | 11 | - | - |
| | Paraffin wax C | | - | - | - | 11 | - |
| | Paraffin wax D | | - | - | - | - | 10 |
| Higher alcohol | Lauryl alcohol (B) | | 85 | 80 | 89 | 89 | 90 |
| Evaluation results | Melting temp. | °C | 21.8 | 21.6 | 22.0 | 22.0 | 23.0 |
| | Solidification temp. | | 22.5 | 22.6 | 22.0 | 22.0 | 23.1 |
| | Difference (ΔT) between melting temp. and solidification temp. | | 0.7 | 1.0 | 0 | 0 | 0.1 |
| | Degree of solidification point depression | | 1.0 | 0.7 | 1.0 | 0.7 | 0.9 |
| | | - | G | G | G | G | G |
| Usability determination | | - | G | G | G | G | G |

| | | | | | | | |
|---|---|---|---|---|---|---|---|
| Note: In the above table, "temp." stands for "temperature" and "Ex." stands for "Example". | | | | | | | |

As is clear from Table 2 and Figs. 7, 9, and 10, the heat storage material compositions of Examples 1 to 10, which are within the scope of an embodiment of the present invention, each have (i) a degree of solidification point depression of less than 1.5°C, (ii) a difference (ΔT) between melting temperature and solidification temperature of not more than 1.0°C, and (iii) a melting temperature and a solidification temperature which both are in the range of 21.5°C to 23.5°C.

The following can be seen from the upper graph (graph of a temperature decreasing process) in Fig. 7 and the upper graph (graph of a temperature decreasing process) in Fig. 9. In Example 1, the peak area ratio (a)/(b) of the used higher hydrocarbon (A) is in a range of 95/5 to 70/30. In Example 10, the peak area ratio (a)/(b) of the used higher hydrocarbon (A) is outside the range of 95/5 to 70/30. In Example 1, when the temperature is above the solidification temperature, the temperature decreases at a more constant rate than in Example 10. In other words, compared to the heat storage material composition of Example 10, the heat storage material composition of Example 1 can be used more suitably for (a) very stably storing and transporting a temperature control target article whose controlled temperature is around 22.5°C, such as a blood platelet preparation, and (b) maintaining a very comfortable temperature in a living space.

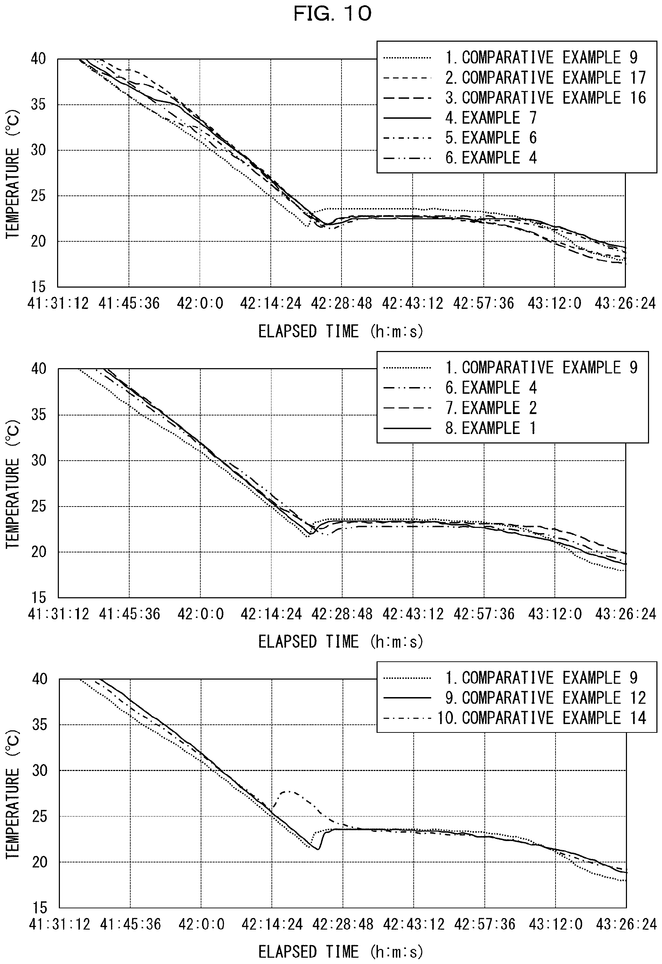

The following can be seen from the uppermost graph (uppermost tier) and middle graph (middle tier) of Fig. 10. With regard to the weight ratio of the higher hydrocarbon (A) with respect to 100 weight% of the heat storage material composition, and specifically a weight ratio in a range of not less than 2 weight% and not more than 22 weight%, a smaller weight ratio of the higher hydrocarbon (A) correlates to the solidification behavior of the heat storage material composition being such that, at temperatures above the solidification temperature, the temperature decreases at a more constant rate.

The following can be seen from Fig. 11. If the weight ratio of the higher hydrocarbon (A) with respect to 100 weight% of the heat storage material composition is not more than 22 weight%, then the heat quantity of a sub-peak will be not more than 13%, where 100% represents the total heat quantity (J/g) of the main peak and the sub-peak. A smaller weight ratio of the higher hydrocarbon (A) (below 22 weight%) corresponds to a smaller heat quantity of the sub-peak. If the weight ratio of the higher hydrocarbon (A) is 5 weight%, there will be one melting peak. Note that Comparative Example 9 is a heat storage material composition in which lauryl alcohol is used by itself. The DSC curve of Comparative Example 9 has a sub-peak to the left of the main peak. As described above, lauryl alcohol can take on a plurality of crystal structures. In other words, the two peaks in the DSC curve of Comparative Example 9 are due to the lauryl alcohol taking on a plurality of crystal structures. Herein, only in the case of (i) lauryl alcohol by itself and (ii) a heat storage material composition which uses lauryl alcohol by itself and does not include the higher hydrocarbon (A), even if there are a plurality of peaks in the DSC curve, they are treated as one peak when calculating the area of the peaks.

### (Comparative Examples 1 to 7)

Comparative Examples were prepared in which lauryl alcohol by itself was used as the heat storage material composition. Five samples of lauryl alcohol each from a differing production lot were used as Comparative Examples 1 to 5. Two samples of lauryl alcohol taken randomly from the same production lot were used as Comparative Examples 6 and 7. DSC measurement was carried out for the heat storage material compositions (lauryl alcohol by itself) of Comparative Examples 1 to 7 so as to obtain DSC curves. The DSC curves thus obtained were evaluated for variations in (i) the melting peak temperature observed in melting behavior and (ii) the DSC curve itself. The evaluation results are indicated in Table 4. The DSC curves of Comparative Examples 1 to 5 are shown in the upper graph of Fig. 4. The DSC curves of Comparative Examples 6 and 7 are shown in the lower graph of Fig. 4.

**[Table 4]**

| | | Melting temp. (Value taken from reference literature) | | Comp. Ex. 1 | Comp. Ex. 2 | Comp. Ex. 3 | Comp. Ex. 4 | Comp. Ex. 5 | Comp. Ex. 6 | Comp. Ex. 7 |
|---|---|---|---|---|---|---|---|---|---|---|
| Higher hydrocarbon | | - | Weight% | - | - | - | - | - | - | - |
| Higher alcohol | Lauryl alcohol | 24 | Weight% | 100 | 100 | 100 | 100 | 100 | 100 | 100 |
| | | | Product lot | Lot A | Lot B | Lot C | Lot D | Lot E | Lot F-1 | Lot F-2 |
| DSC evaluation results (rate of temp. increase/decrease: 2.0°C/min) | Melting peak temp. | | °C | 24.7 | 25.1 | 24.0 | 24.4 | 23.5 | 23.75 | 24.9 |

| | | | | | | | | | | |
|---|---|---|---|---|---|---|---|---|---|---|
| Note: In the above table, "temp." stands for "temperature" and "Comp. Ex." stands for "Comparative Example". | | | | | | | | | | |

As is clear from Table 4 and the upper graph of Fig. 4, in Comparative Examples 1 to 5, the different production lots result in variations in melting behavior and melting peak temperature, despite all being lauryl alcohol. Furthermore, as is clear from Table 4 and the lower graph of Fig. 4, there can be variations in melting behavior and melting peak temperature even within the same production lot.

DSC measurements were further carried out for (i) commercially available lauryl alcohol by itself and (ii) lauryl alcohol obtained by mixing commercially available lauryl alcohol with predetermined amounts of water, so as to obtain DSC curves. The DSC curves thus obtained are shown in the upper graph of Fig. 5. The DSC curves thus obtained were evaluated for variations. As is indicated in the upper graph of Fig. 5, there were large variations in the solidification behavior and melting behavior of lauryl alcohol by itself depending on moisture content.

Heat storage material compositions in accordance with an embodiment of the present invention were prepared using the respective types of lauryl alcohol used in the upper graph of Fig. 5 and the paraffin wax A which is the higher hydrocarbon (A). DSC measurements were carried out for the heat storage material compositions thus obtained. The DSC curves thus obtained are shown in the lower graph of Fig. 5. The DSC curves thus obtained were evaluated for variations. As indicated in the lower graph of Fig. 5, the inclusion of the higher hydrocarbon (A) resulted in heat storage material compositions having only small variations in solidification behavior and melting behavior regardless of the moisture content of the lauryl alcohol.

### (Comparative Examples 8 to 23)

Prepared as the heat storage material composition were solutions containing the higher hydrocarbons and the higher alcohols indicated in Table 4, at the weight% indicated in Table 4. For each of the Comparative Example 8 to 23 obtained, the above temperature increase/decrease test was carried out to measure and evaluate the melting temperature, the solidification temperature, the difference (ΔT) between the melting temperature and the solidification temperature, and the degree of solidification point depression. The results are indicated in Tables 5 to 7. In Tables 5 to 7, note that Comparative Examples 8 and 9 are lauryl alcohol taken from differing production lots. Figs. 6 to 10 and Fig. 13 show graphs of change in temperature of heat storage material compositions of some of the Comparative Examples, which graphs were obtained by the above-described temperature increase/decrease test. For some of the Comparative Examples, the above-described DSC measurement was carried out. Fig. 11 indicates the DSC curves obtained by the DSC measurements and the melting peak heat quantity found from the DSC curves.

**[Table 5]**

| | | | Comp. Ex. 8 | Comp. Ex. 9 | Comp. Ex. 10 | Comp. Ex. 11 | Comp. Ex. 12 | Comp. Ex. 13 |
|---|---|---|---|---|---|---|---|---|
| Higher hydrocarbon | Octadecane | Weight% | - | - | - | 10 | - | - |
| | Eicosane | | - | - | - | - | 5 | 10 |
| | Docosane | | - | - | - | - | - | - |
| | Paraffin wax A | | - | - | - | - | - | - |
| | 1-Decanol | | - | - | - | - | - | - |
| Higher alcohol | Lauryl alcohol | | 100 | 100 | - | 90 | 95 | 90 |
| | Myristyl alcohol | | - | - | 100 | - | - | - |
| Evaluation results | Melting temp. | °C | 22.4 | 22.5 | 35.7 | 19.7 | 22.0 | 21.4 |
| | Solidification temp. | | 23.6 | 23.5 | 37.3 | 20.7 | 23.6 | 22.5 |
| | Difference (ΔT) between melting temp. and solidification temp. | | 1.2 | 1.0 | 1.6 | 1.0 | 1.6 | 1.1 |
| | Degree of solidification point depression | | 2.3 | 1.5 | 0.2 | 2.5 | 2.1 | 2.5 |
| | | - | P | P | G | P | P | P |
| Usability determination | | - | P | P | P | P | P | P |

| | | | | | | | | |
|---|---|---|---|---|---|---|---|---|
| Note: In the above table, "temp." stands for "temperature" and "Comp. Ex." stands for "Comparative Example". | | | | | | | | |

**[Table 6]**

| | | | Comp. Ex. 14 | Comp. Ex. 15 | Comp. Ex. 16 | Comp. Ex. 17 |
|---|---|---|---|---|---|---|
| Higher hydrocarbon | Octadecane | Weight% | - | - | - | - |
| | Eicosane | | 25 | - | - | - |
| | Docosane | | - | 10 | - | - |
| | Paraffin wax A | | - | - | 25 | 30 |
| | 1-Decanol | | - | - | - | - |
| Higher alcohol | Lauryl alcohol | | 75 | 90 | 75 | 70 |
| | Myristyl alcohol | | - | - | - | - |
| Evaluation results | Melting temp. | °C | 22.5 | 22.2 | 21.5 | 21.5 |
| | Solidification temp. | | 27.7 / 23.0 | 25.6 / 22.9 | 22.7 | 22.8 |
| | Difference (ΔT) between melting temp. and solidification temp. | | 5.2 / 0.5 | 3.4 / 0.7 | 1.2 | 1.3 |
| | Degree of solidification point depression | | 1.9 | 0.5 | 1.1 | 1.0 |
| | | - | P | G | F | G |
| Usability determination | | - | P | P | P | P |

| | | | | | | |
|---|---|---|---|---|---|---|
| Note: In the above table, "temp." stands for "temperature" and "Comp. Ex." stands for "Comparative Example". | | | | | | |

**[Table 7]**

| | | | Comp. Ex. 18 | Comp. Ex. 19 | Comp. Ex. 20 | Comp. Ex. 21 | Comp. Ex. 22 | Comp. Ex. 23 |
|---|---|---|---|---|---|---|---|---|
| Higher hydrocarbon | Octadecane | Weight% | - | - | - | - | - | - |
| | Eicosane | | 10 | - | - | - | - | - |
| | Docosane | | - | 10 | - | - | - | - |
| | Paraffin wax A | | - | - | 10 | - | 5 | 10 |
| | 1-Decanol | | - | - | - | 100 | 95 | 90 |
| Higher alcohol | Lauryl alcohol | | - | - | - | - | - | - |
| | Myristyl alcohol | | 90 | 90 | 90 | - | - | - |
| Evaluation results | Melting temp. | °C | 32.8 | 34.4 | 34.1 | 4.5 | 3.7 | 3.4 |
| | Solidification temp. | | 35.8 | 36.3 | 35.9 | 5.3 | 5.0 | 4.8 |
| | Difference (ΔT) between melting temp. and solidification temp. | | 3.0 | 1.9 | 1.8 | 0.8 | 1.3 | 1.4 |
| | Degree of solidification point depression | | 0.9 | 0.9 | 0.3 | 2.5 | 2.5 | 2.3 |
| | | - | G | G | G | P | P | P |
| Usability determination | | - | P | P | P | P | P | P |

| | | | | | | | | |
|---|---|---|---|---|---|---|---|---|
| Note: In the above table, "temp." stands for "temperature" and "Comp. Ex." stands for "Comparative Example". | | | | | | | | |

As is clear from Tables 5 to 7, Figs. 6 to 10, and Fig. 13, the heat storage material compositions of Comparative Examples 8 and 9, in which lauryl alcohol of differing production lots was used by itself, each had a degree of solidification point depression of not less than 1.5°C. Furthermore, in the heat storage material composition of Comparative Example 8, the difference (ΔT) between the melting temperature and the solidification temperature was greater than 1.0°C. In a case where lauryl alcohol by itself is used as the heat storage material composition, differences in production lots cause variations in the melting behavior and the melting temperature, as was confirmed in Comparative Examples 1 to 7. Furthermore, in the heat storage material composition of Comparative Example 10, in which myristyl alcohol was used by itself, the difference (ΔT) between the melting temperature and the solidification temperature was greater than 1.0°C.

The heat storage material compositions of Comparative Examples 11 to 15 each include only one type of higher hydrocarbon having 20 to 35 carbon atoms. The heat storage material compositions of Comparative Examples 11 to 14 each had a degree of solidification point depression of not less than 1.5°C. The heat storage material compositions of Comparative Examples 11 to 13 each had a melting temperature and/or a solidification temperature outside the range of 21.5°C to 23.5°C. In each of the heat storage material compositions of Comparative Examples 12 and 13, the difference between the solidification temperature and the melting temperature was greater than 1.0°C.

The following description will discuss Comparative Example 14 in detail. The heat storage material composition of Comparative Example 14 has a degree of solidification point depression of not less than 1.5°C. Furthermore, the heat storage material composition of Comparative Example 14 has a solidification temperature of 27.7°C and a solidification temperature of 23.0°C. This phenomenon is discussed below using the bottommost graph (bottommost tier) of Fig. 10, which is a graph indicating the change in temperature of the heat storage material composition of Comparative Example 14 as observed in a temperature decreasing process of a temperature increase/decrease test. The temperature of the heat storage material composition of Comparative Example 14 exhibits almost no change around 23.0°C, due to the latent heat of the heat storage material composition. As such, 23.0°C is one of the solidification temperatures of the heat storage material composition of Comparative Example 14. However, the temperature of the heat storage material composition of Comparative Example 14 does not decrease at a constant rate when above 23.0°C. The temperature of the heat storage material composition of Comparative Example 14 decreases at a constant rate to around 25.7°C, then increases approximately 2.0°C, and then decreases rapidly thereafter. As such, it can be said that the heat storage material composition of Comparative Example 15 exhibits a second solidification behavior around 27.7°C, in addition to the main solidification behavior at around 23.0°C. Note that 27.7°C is within the temperature range at which the heat storage material composition can actually be used. As such, it is likely that, in actual use, the heat storage material composition of Comparative Example 14 will undergo a change in phase outside the range of 2 1.5°C to 23.5°C. Because the heat storage material composition of Comparative Example 14 solidifies in two stages, there is the disadvantage that the heat storage material composition will release heat at a temperature other than the target temperature to be maintained and therefore have heat quantity loss, i.e., there is a decrease in latent heat quantity in the target temperature range.

The following description will discuss Comparative Example 15 in detail. The heat storage material composition of Comparative Example 15 has a solidification temperature of 25.6°C and a solidification temperature of 22.9°C. This phenomenon is discussed below using (a) of Fig. 7, which is a graph indicating the change in temperature of the heat storage material composition of Comparative Example 15 as observed in a temperature decreasing process of a temperature increase/decrease test. The temperature of the heat storage material composition of Comparative Example 15 exhibits almost no change around 22.9°C, due to the latent heat of the heat storage material composition. As such, 22.9°C is one of the solidification temperatures of the heat storage material composition of Comparative Example 15. However, the temperature of the heat storage material composition of Comparative Example 15 does not decrease at a constant rate when above 22.9°C. The temperature of the heat storage material composition of Comparative Example 15 decreases at a constant rate to around 25°C, then increases approximately 0.6°C, and then decreases rapidly thereafter. As such, it can be said that the heat storage material composition of Comparative Example 15 exhibits a second solidification behavior around 25.6°C, in addition to the main solidification behavior at around 22.9°C. Note that 25.6°C is within the temperature range at which the heat storage material composition can actually be used. As such, it is likely that, in actual use, the heat storage material composition of Comparative Example 15 will undergo a change in phase outside the range of 21.5°C to 23.5°C. Because the heat storage material composition of Comparative Example 15 solidifies in two stages, there is the disadvantage that the heat storage material composition will release heat at a temperature other than the target temperature to be maintained and therefore have heat quantity loss, i.e., there is a decrease in latent heat quantity in the target temperature range.

The heat storage material compositions of Comparative Examples 16 and 17 each include the paraffin wax A, which is the higher hydrocarbon (A), in an amount greater than 22 weight%, with respect to 100 weight% of the heat storage material composition. Each of these heat storage material compositions of Comparative Examples 16 and 17 (a) exhibits a difference between solidification temperature and melting temperature which is greater than 1.0°C (Table 6), (b) has a sub-peak whose heat quantity is greater than 13%, where 100% represents the total heat quantity (J/g) of the main peak and the sub-peak in a DSC curve (Fig. 11), and (c) in a temperature decreasing process of a temperature increase/decrease test, does not decrease in temperature at a constant rate in a temperature range above the solidification temperature (uppermost graph of Fig. 10).

Each of the heat storage material compositions of Comparative Example 10 and Comparative Examples 18 to 20 uses myristyl alcohol as a higher alcohol. Each of the heat storage material compositions of Comparative Example 10 and Comparative Examples 18 to 20 exhibits a difference (ΔT) between the solidification temperature and the melting temperature of greater than 1.0°C, and has a melting temperature and a solidification temperature which are both far outside the range of 21.5°C to 23.5°C (see Fig. 8).

Each of the heat storage material compositions of Comparative Examples 21 to 23 uses 1-decanol as a higher alcohol. Each of the heat storage material compositions of Comparative Example 10 and Comparative Examples 18 to 20 has a degree of solidification point depression of not less than 1.5°C, and has a melting temperature and a solidification temperature which are both far outside the range of 21.5°C to 23.5°C. Furthermore, in Comparative Examples 21 and 23, the difference (ΔT) between the melting temperature and the solidification temperature is greater than 1.0°C.

From the above results, it can be seen that the heat storage material composition in accordance with an embodiment of the present invention (1) makes it possible to reduce or prevent variations in melting behavior and solidification behavior of lauryl alcohol from differing production lots, (2) has a degree of solidification point depression of less than 1.5°C, (3) exhibits a difference (ΔT) between melting temperature and solidification temperature of not more than 1.0°C, and (4) has a melting temperature and a solidification temperature which stably fall in a range of 21.5°C to 23.5°C.

### Industrial Applicability

An embodiment of the present invention is useful in a variety of fields in which there may be a need to maintain a temperature while storing or transporting various articles, including pharmaceutical products, medical devices, cells, test specimens, and organs in the field of e.g. medical technology, as well as chemicals, semiconductor-related members, and foods. An embodiment of the present invention can be used in a temperature range that is comfortable for human living and activities, and is therefore useful for application in a living environment.

### Reference Signs List

1: Transport container
5: Space
6: Spacer
10: Cold storage material
11: Cap of cold storage material
20: Cold storage material composition
40: Thermally insulative container
41: Box
42: Lid
410: Opening
411: Bottom of box
412: Side of box

## Claims

1. A heat storage material composition comprising:
a higher hydrocarbon (A); and
lauryl alcohol (B),
the heat storage material composition satisfying all of the following conditions (1) to (5):
(1) a weight ratio of the higher hydrocarbon (A) included in the heat storage material composition is not less than 2 weight% and not more than 22 weight% with respect to 100 weight% of the heat storage material composition;
(2) the higher hydrocarbon (A) includes not less than two types of hydrocarbons having 20 to 35 carbon atoms, a weight ratio of the not less than two types of the hydrocarbons having 20 to 35 carbon atoms included in the higher hydrocarbon (A) being not less than 50 weight% with respect to 100 weight% of the total amount of the higher hydrocarbon (A) included in the heat storage material composition;
(3) the higher hydrocarbon (A) includes a hydrocarbon whose melting peak temperature in a DSC curve is not less than 35°C and not more than 70°C;
(4) a difference (ΔT) between a melting temperature of the heat storage material composition and a solidification temperature of the heat storage material composition is not more than 1.0°C; and
(5) the heat storage material composition has a degree of solidification point depression of less than 1.5°C.

2. The heat storage material composition according to claim 1, wherein the higher hydrocarbon (A) includes not less than two types of hydrocarbons having 20 to 30 carbon atoms, a weight ratio of the not less than two types of the hydrocarbons having 20 to 30 carbon atoms included in the higher hydrocarbon (A) being not less than 50 weight% with respect to 100 weight% of the total amount of the higher hydrocarbon (A) included in the heat storage material composition.

3. The heat storage material composition according to claim 1 or 2, wherein:
the higher hydrocarbon (A) has not less than two melting peaks in a DSC curve, the not less than two melting peaks including a peak (a) in a range of not less than 35°C to not more than 70°C and a peak (b) in a range of not less than 20°C to less than 35°C; and
a ratio of an area of the peak (a) to an area of the peak (b) is 95/5 to 70/30.

4. The heat storage material composition according to any one of claims 1 to 3, wherein the melting temperature of the heat storage material composition is in a range of 21.5°C to 23.5°C.

5. A method of using a heat storage material composition, comprising the steps of:
placing the heat storage material composition according to any one of claims 1 to 4 into a container; and
maintaining a temperature of 21.5°C to 23.5°C inside the container, in an environment in which the temperature outside the container is -10°C to 35°C.

6. A method of producing a building, comprising the steps of:
placing the heat storage material composition according to any one of claims 1 to 4 into a living space; and
maintaining a temperature of 20.5°C to 24.5°C inside the living space.

## Patentansprüche

1. Wärmespeichermaterialzusammensetzung, aufweisend:
einen höheren Kohlenwasserstoff (A); und
Laurylalkohol (B),
wobei die Wärmespeichermaterialzusammensetzung alle der folgenden Bedingungen (1) bis (5) erfüllt:
(1) ein Gewichtsverhältnis des höheren Kohlenwasserstoffs (A), der in der Wärmespeichermaterialzusammensetzung enthalten ist, beträgt, bezogen auf 100 Gew.-% der Wärmespeichermaterialzusammensetzung, nicht weniger als 2 Gew.-% und nicht mehr als 22 Gew.-%;
(2) der höhere Kohlenwasserstoff (A) beinhaltet nicht weniger als zwei Arten von Kohlenwasserstoffen mit 20 bis 35 Kohlenstoffatomen, wobei ein Gewichtsverhältnis der nicht weniger als zwei Arten der in dem höheren Kohlenwasserstoff (A) enthaltenen Kohlenwasserstoffe mit 20 bis 35 Kohlenstoffatomen in Bezug auf 100 Gew.-% der Gesamtmenge des in der Wärmespeichermaterialzusammensetzung enthaltenen höheren Kohlenwasserstoffs (A) nicht weniger als 50 Gew.-% beträgt;
(3) der höhere Kohlenwasserstoff (A) beinhaltet einen Kohlenwasserstoff, dessen Spitzenschmelztemperatur in einer DSC-Kurve nicht weniger als 35 °C und nicht mehr als 70 °C beträgt;
(4) eine Differenz (ΔT) zwischen einer Schmelztemperatur der Wärmespeichermaterialzusammensetzung und einer Erstarrungstemperatur der Wärmespeichermaterialzusammensetzung beträgt nicht mehr als 1,0 °C; und
(5) die Wärmespeichermaterialzusammensetzung weist einen Grad der Erstarrungspunktserniedrigung von weniger als 1,5 °C auf.

2. Wärmespeichermaterialzusammensetzung nach Anspruch 1, wobei der höhere Kohlenwasserstoff (A) nicht weniger als zwei Arten von Kohlenwasserstoffen mit 20 bis 30 Kohlenstoffatomen umfasst, wobei ein Gewichtsverhältnis der nicht weniger als zwei Arten der in dem höheren Kohlenwasserstoff (A) enthaltenen Kohlenwasserstoffe mit 20 bis 30 Kohlenstoffatomen in Bezug auf 100 Gew.-% der Gesamtmenge des in der Wärmespeichermaterialzusammensetzung enthaltenen höheren Kohlenwasserstoffs (A) nicht weniger als 50 Gew.-% beträgt.

3. Wärmespeichermaterialzusammensetzung nach Anspruch 1 oder 2, wobei:
der höhere Kohlenwasserstoff (A) nicht weniger als zwei Schmelzpeaks in einer DSC-Kurve aufweist, wobei die nicht weniger als zwei Schmelzpeaks einen Peak (a) in einem Bereich von nicht weniger als 35 °C bis nicht mehr als 70 °C und einen Peak (b) in einem Bereich von nicht weniger als 20 °C bis weniger als 35 °C umfassen; und
das Verhältnis der Fläche des Peaks (a) zur Fläche des Peaks (b) 95/5 bis 70/30 beträgt.

4. Wärmespeichermaterialzusammensetzung nach einem der Ansprüche 1 bis 3, wobei die Schmelztemperatur der Wärmespeichermaterialzusammensetzung in einem Bereich von 21,5 °C bis 23,5 °C liegt.

5. Verfahren zur Verwendung einer Wärmespeichermaterialzusammensetzung, das die folgenden Schritte aufweist:
Einbringen der Wärmespeichermaterialzusammensetzung nach einem der Ansprüche 1 bis 4 in einen Behälter; und
Aufrechterhalten einer Temperatur von 21,5 °C bis 23,5 °C im Inneren des Behälters in einer Umgebung, in der die Temperatur außerhalb des Behälters -10 °C bis 35 °C beträgt.

6. Verfahren zum Herstellen eines Gebäudes, das folgende Schritte aufweist:
Einbringen der Wärmespeichermaterialzusammensetzung nach einem der Ansprüche 1 bis 4 in einen Wohnraum; und
Aufrechterhalten einer Temperatur von 20,5 °C bis 24,5 °C in dem Wohnraum.

## Revendications

1. Composition de matière de stockage de chaleur comprenant :
un hydrocarbure supérieur (A) ; et
de l'alcool laurylique (B),
la composition de matière de stockage de chaleur satisfaisant toutes les conditions (1) à (5) suivantes :
(1) un rapport en masse de l'hydrocarbure supérieur (A) inclus dans la composition de matière de stockage de chaleur n'est pas inférieur à 2 % en masse et pas supérieur à 22 % en masse par rapport à 100 % en masse de la composition de matière de stockage de chaleur ;
(2) l'hydrocarbure supérieur (A) n'inclut pas moins de deux types d'hydrocarbures ayant de 20 à 35 atomes de carbone, un rapport en masse des pas moins de deux types des hydrocarbures ayant de 20 à 35 atomes de carbone inclus dans l'hydrocarbure supérieur (A) n'étant pas inférieur à 50 % en masse par rapport à 100 % en masse de la quantité totale de l'hydrocarbure supérieur (A) inclus dans la composition de matière de stockage de chaleur ;
(3) l'hydrocarbure supérieur (A) inclut un hydrocarbure dont la température de pic de fusion dans une courbe DSC n'est pas inférieure à 35°C et pas supérieure à 70°C ;
(4) une différence (ΔT) entre une température de fusion de la composition de matière de stockage de chaleur et une température de solidification de la composition de matière de stockage de chaleur n'est pas supérieure à 1,0°C ; et
(5) la composition de matière de stockage de chaleur présente un degré de dépression de point de solidification inférieur à 1,5°C.

2. Composition de matière de stockage de chaleur selon la revendication 1, dans laquelle l'hydrocarbure supérieur (A) n'inclut pas moins de deux types d'hydrocarbures ayant de 20 à 30 atomes de carbone, un rapport en masse des pas moins de deux types des hydrocarbures ayant de 20 à 30 atomes de carbone inclus dans l'hydrocarbure supérieur (A) n'étant pas inférieur à 50 % en masse par rapport à 100 % en masse de la quantité totale de l'hydrocarbure supérieur (A) inclus dans la composition de matière de stockage de chaleur.

3. Composition de matière de stockage de chaleur selon la revendication 1 ou 2, dans laquelle :
l'hydrocarbure supérieur (A) ne présente pas moins de deux pics de fusion dans une courbe DSC, les pas moins de deux pics de fusion incluant un pic (a) dans un intervalle d'au moins 35°C à au plus 70°C et un pic (b) dans un intervalle d'au moins 20°C à moins de 35°C ; et
un rapport d'une surface du pic (a) à une surface du pic (b) est de 95/5 à 70/30.

4. Composition de matière de stockage de chaleur selon l'une quelconque des revendications 1 à 3, dans laquelle la température de fusion de la composition de matière de stockage de chaleur se trouve dans un intervalle de 21,5°C à 23,5°C.

5. Procédé d'utilisation d'une composition de matière de stockage de chaleur comprenant les étapes de :
placement de la composition de matière de stockage de chaleur selon l'une quelconque des revendications 1 à 4 dans un réservoir ; et
de maintien d'une température de 21,5°C à 23,5°C à l'intérieur du réservoir, dans un environnement dans lequel la température à l'extérieur du réservoir est de -10°C à 35°C.

6. Procédé de production d'une construction, comprenant les étapes de :
placement de la composition de matière de stockage de chaleur selon l'une quelconque des revendications 1 à 4 dans un espace de vie ; et
de maintien d'une température de 20,5°C à 24,5°C à l'intérieur de l'espace de vie.
